# EUROPEAN PATENT SPECIFICATION

(11) **EP 4 078 378 B1**
(45) Date of publication and mention of the grant of the patent: **02.04.2025**
(21) Application number: 19956826.2
(22) Date of filing: 20.12.2019
(51) Int. Cl.: G06F 12/02

(54) **MANAGING RUNTIME APPARATUS FOR TIERED OBJECT MEMORY PLACEMENT**
VERWALTUNG EINES LAUFZEIT-GERÄTS FÜR GESTUFTE OBJEKTSPEICHERPLATZIERUNG
GESTION D'APPAREIL D'EXÉCUTION POUR PLACEMENT D'OBJETS EN MÉMOIRE À PLUSIEURS NIVEAUX

(43) Date of publication of application: 26.10.2022
(73) Proprietor: INTEL Corporation, Santa Clara, CA 95054 (US)
(72) Inventor: YANG, Bin, Shanghai, 200241 (CN); XIE, Chao, Shanghai, 200241 (CN); CHEN, Dong-Yuan, Los Altos Hills, CA 94022 (US); BAO, Jia, Shanghai, 200241 (CN); SUN, Mingqiu, Beaverton, OR 97007 (US); HAGHIGHAT, Mohammad, R., San Jose, CA 95118 (US); SHI, Qiming, Shanghai, 200241 (CN); ZHOU, Zhen, Shanghai, 200241 (CN)
(74) Representative: 2SPL Patentanwälte PartG mbB
(86) International application number: PCT/CN2019/126847
(87) International publication number: WO 2021/120140

(56) References cited:
- CN-A- 1 838 090
- CN-A- 101 551 782
- CN-A- 105 453 054
- US-A1- 2003 212 719
- US-A1- 2004 133 895
- MICHAEL R JANTZ ET AL: "Cross-layer memory management for managed language applications", OBJECT-ORIENTED PROGRAMMING, SYSTEMS, LANGUAGES, AND APPLICATIONS, ACM, 2 PENN PLAZA, SUITE 701 NEW YORK NY 10121-0701 USA, 23 October 2015 (2015-10-23), pages 488 - 504, XP058074919, ISBN: 978-1-4503-3689-5, DOI: 10.1145/2814270.2814322

## Description

### TECHNICAL FIELD

. The present technology relates to a semiconductor apparatus, a non-transitory computer readable storage medium and a method as set out in the appended set of claims.

### BACKGROUND

Computer-based applications such as servers, cloud infrastructure and database controllers make use of virtual machines, such as the Java Virtual Machine, to provide the ability to execute programs in a platform-independent environment. Virtual machines allow for programs to implemented in a variety of computing platforms while requiring only relatively minor code changes. Managed programming languages such as JAVA, PYTHON and JAVASCRIPT provide programmers with tools for creating flexible applications that may be executed in a virtual machine environment. A managed runtime is used in such managed languages, providing memory management, garbage collection, and hot method profiling. In a managed runtime, an application is typically rendered as a machine independent set of instructions (byte-code), which will then be interpreted during execution. A hot method profiler collects runtime information to identify which methods are hot spots. Identified hot methods thus may be compiled into native codes via a Just-in-Time (JIT) compiler for faster execution. A garbage collector typically runs in an independent thread to manage and recycle data heap.

Managing runtime allocation of objects for memory storage, particularly in a heterogeneous memory architecture using two or more tiers of memory having different performance, capacity and cost, provides challenges when attempting to optimize for higher performance or lower cost.

Non-patent literature MICHAEL R JANTZ ET AL: "Cross-layer memory management for managed language applications", OBJECT-ORIENTED PROGRAMMING, SYSTEMS, LANGUAGES, AND APPLICATIONS, ACM, 2 PENN PLAZA, SUITE 701 NEW YORK NY 10121-0701 USA, 23 October 2015, pages 488-504, XP058074919, DOI: 10.1145/28142702814322 ISBN: 978-1-4503-3689-5 discloses a collaborative framework that employs object placement, cross-layer communication, and page-level management to effectively distribute application objects in the DRAM hardware to achieve desired power/performance goals. It describes the design and implementation of a framework, which integrates automatic object profiling and analysis at the application layer with fine-grained management of memory hardware resources in the operating system. It demonstrates the utility of the framework by employing it to more effectively control memory power consumption. It discloses a custom memory-intensive workload to show the potential of the approach. It discloses a sampling and profiling-based analyses and modifies the code generator in the HotSpot VM to understand object usage patterns and automatically determine and control the placement of hot and cold objects in a partitioned VM heap. This information is communicated to the operating system, which uses it to map the logical application pages to the appropriate DRAM ranks according to user-defined provisioning goals.

It is provided a semiconductor apparatus, a non-transitory computer readable storage medium and a method. Further aspects are set out in the appended set of claims.

### BRIEF DESCRIPTION OF THE DRAWINGS

The various advantages of the embodiments will become apparent to one skilled in the art by reading the following specification and appended claims, and by referencing the following drawings, in which:
FIGs. 1A-1B provide comparative block diagrams of a conventional managed runtime environment and an example enhanced managed runtime environment with tiered object memory placement according to one or more embodiments;
FIGs. 2A-2B provide block diagrams illustrating example tiered object memory placement according to one or more embodiments;
FIG. 3 provides a block diagram illustrating an example hot object profiler according to one or more embodiments;
FIG. 4 provides a flowchart illustrating operation of an example hot object profiler according to one or more embodiments;
FIGs. 5A-5C provide diagrams illustrating example extensions to object structure and code functions according to one or more embodiments;
FIG. 6 provides a flowchart illustrating operation of an example hot object allocation redirector according to one or more embodiments;
FIGs. 7A-7C provide diagrams illustrating example object migration according to one or more embodiments;
FIGs. 8A-8D provide flowcharts illustrating operation of an example object migrator according to one or more embodiments;
FIGs. 9A-9C provide flowcharts illustrating operation of an example managed runtime computing apparatus with tiered object memory placement according to one or more embodiments;
FIGs. 10A-10B provide block diagrams illustrating an example managed runtime computing system with tiered object memory placement according to one or more embodiments; and
FIG. 11 is a block diagram illustrating an example semiconductor apparatus for managing a runtime computing environment having tiered object memory placement according to one or more embodiments;
FIG. 12 is a block diagram illustrating an example processor according to one or more embodiments; and
FIG. 13 is a block diagram illustrating an example of a multi-processor based computing system according to one or more embodiments.

### DESCRIPTION OF EMBODIMENTS

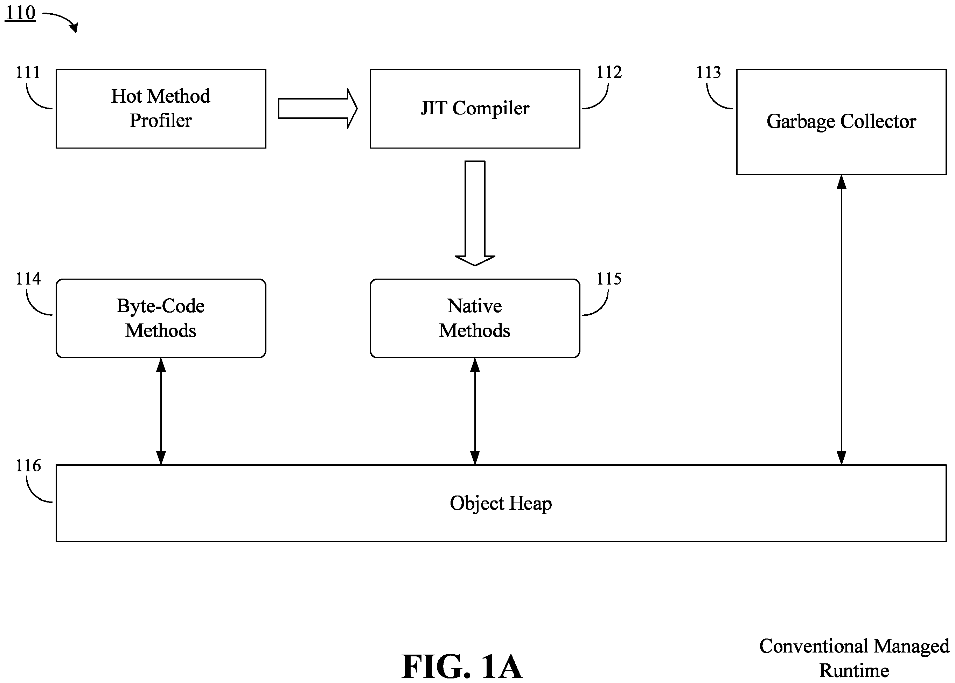

FIG. 1A shows a block diagram of a conventional managed runtime environment 110, which may operate in a virtual machine environment such as a Java virtual machine. In conventional managed runtime environment 110, a hot method profiler 111 identifies hot methods, based on the frequency of method calls, to be compiled by JIT compiler 112 into native code methods 115. Methods not identified as hot methods or methods otherwise not to be compiled via JIT compiler 112 are interpreted as byte-code methods 114. Execution of byte-code methods 114 and native code methods 115 results in placement of objects in object heap 116. A garbage collector 113, running in an independent thread, operates to manage and recycle objects in object heap 116. Hot method profiler 111, JIT compiler 112 and garbage collector 113 may form a runtime engine. Byte-code methods 114, native code methods 115 and object heap 116 may be included in a runtime data area.

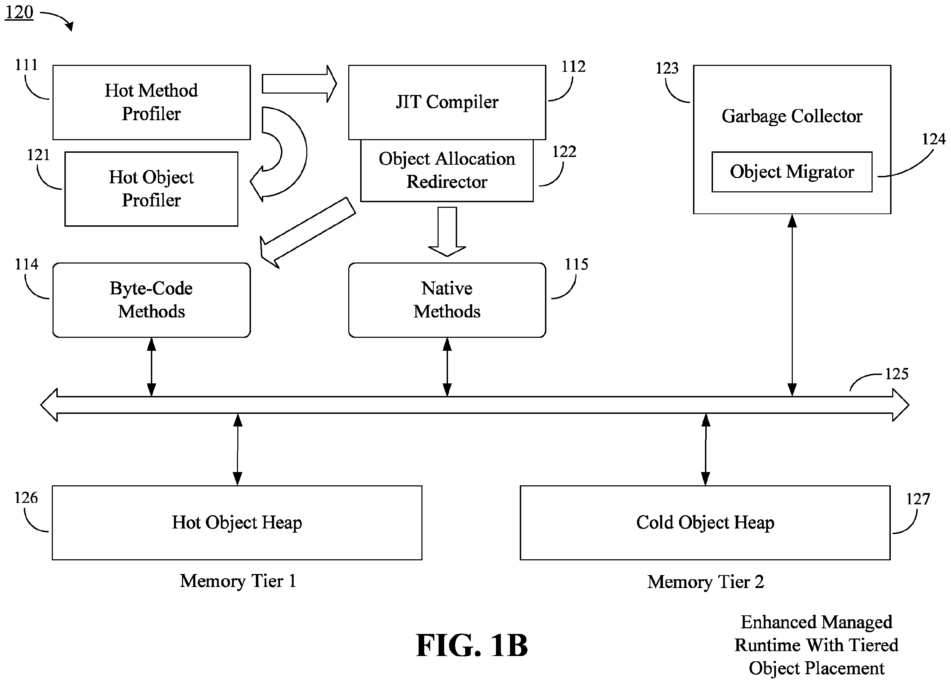

FIG. 1B shows a block diagram of an example enhanced managed runtime environment 120 with tiered object memory placement according to one or more embodiments, with reference to components and features described above including but not limited to the figures and associated description. In addition to several components illustrated in Fig. 1A (hot method profiler 111, JIT compiler 112, byte-code methods 114 and native code methods 115), enhanced managed runtime environment 120 may include hot object profiler 121, object allocation redirector 122, enhanced garbage collector 123, hot object heap 126, and cold object heap 127. Hot object heap 126 and cold object heap 127 may store objects designated as hot or cold, respectively. Objects designated as hot objects are those objects that are likely to be accessed more often than other objects, which are designated as cold objects. Enhanced garbage collector 123 includes object migrator 124, which may migrate objects between hot object heap 126 and cold object heap 127. Hot object profiler 121, object allocation redirector 122, enhanced garbage collector 123, hot object heap 126, and cold object heap 127 may each be implemented in code as an extension to the runtime environment (e.g., as an extension to a Java virtual machine). Enhanced managed runtime environment 120 may also include memory interface 125, which operates to provides a convenient way to allocate, query and move objects within the tiered memory architecture. As an example, memory interface 125 may be provided via the Intel^{®} OneAPI memory interface. Hot method profiler 111, JIT compiler 112, hot object profiler 121, object allocation redirector 122, and enhanced garbage collector 123 may form an enhanced runtime engine. Hot and cold object heaps 126-127 may be included in a runtime data area, apportioned among a first memory tier (tier 1, hot object heap), and a second memory tier (tier 2, cold object heap). Byte-code methods 114 and native code methods 115 may be included in the runtime data area in the first memory tier, second memory tier, and/or other runtime memory (not specified).

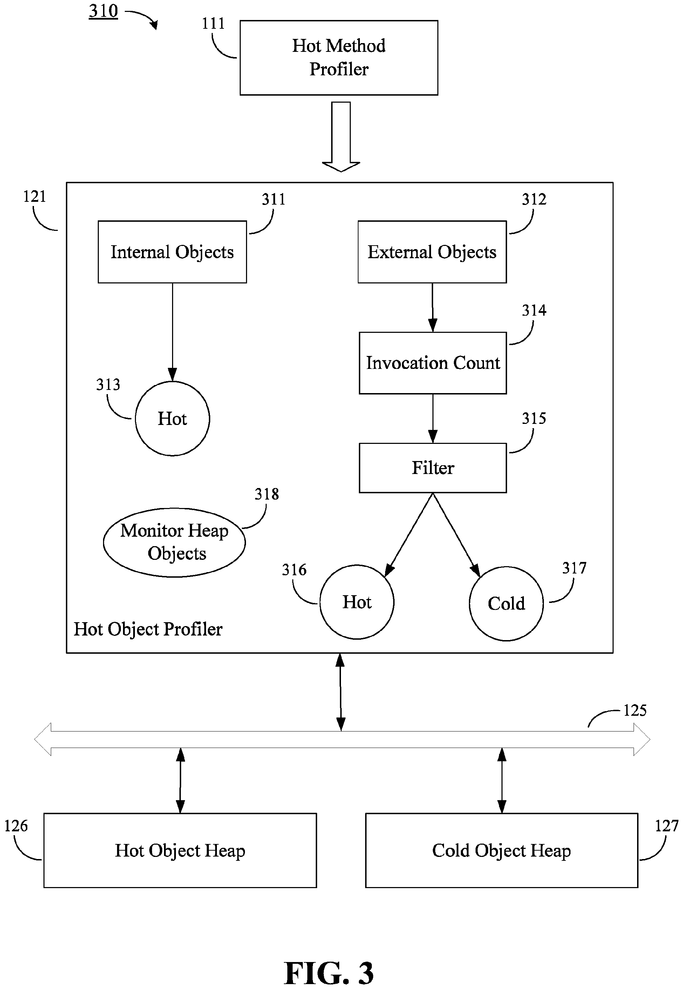

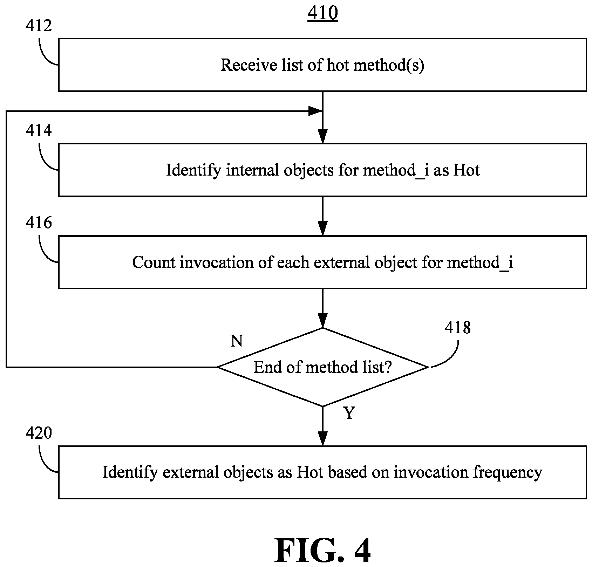

Hot object profiler 121 receives hot methods (e.g., as a list of hot methods) from hot method profiler 111 and may identify hot objects based on the hot methods. Hot object profiler 121 may also monitor objects in hot object heap 126 and/or objects in cold object heap 127 and update a hotness score for one or more monitored objects. Additional details and features of hot object profiler 121 are further described below with reference to FIGs. 3 and 4A-4B.

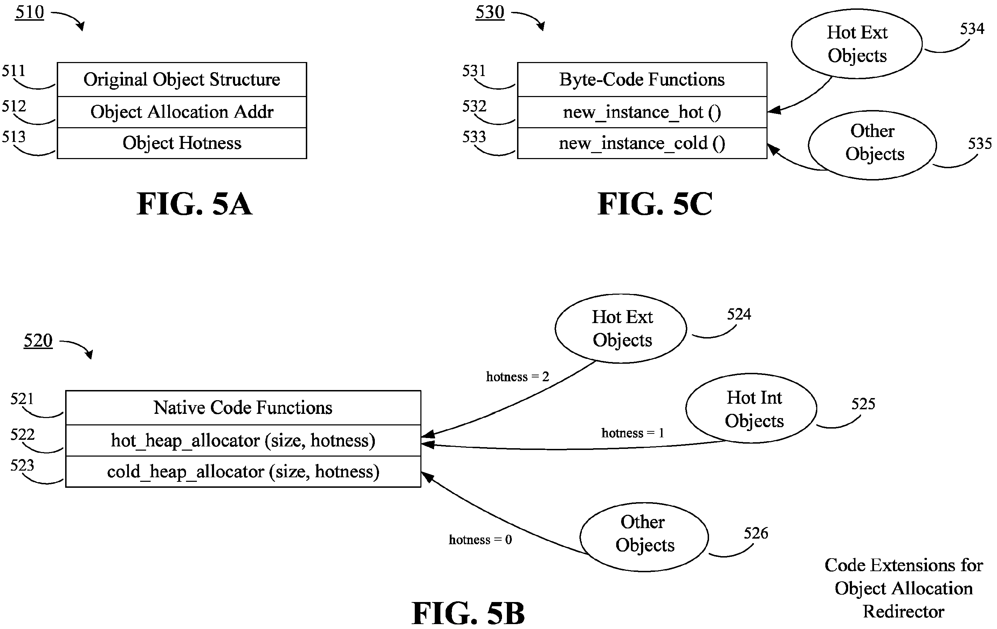

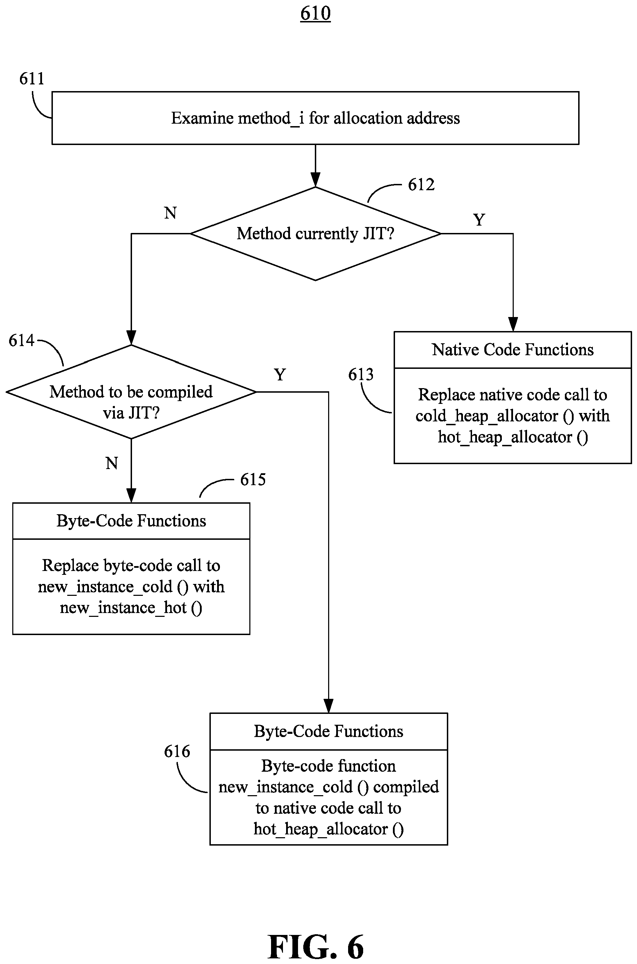

Object allocation redirector 122 manages the allocation of newly-created objects (i.e., objects as they are created) into hot object heap 126 and cold object heap 127. Object allocation redirector 122 may be incorporated within JIT compiler 112 (e.g., forming an enhanced JIT compiler) or may otherwise be closely associated with JIT compiler 112. Object allocation redirector 122 may employ extensions to byte-code methods 114 and native code methods 115 (e.g., see FIGs. 5B-5C). Additional details and features of object allocation redirector 122 are further described below with reference to FIGs. 5A-5C and 6.

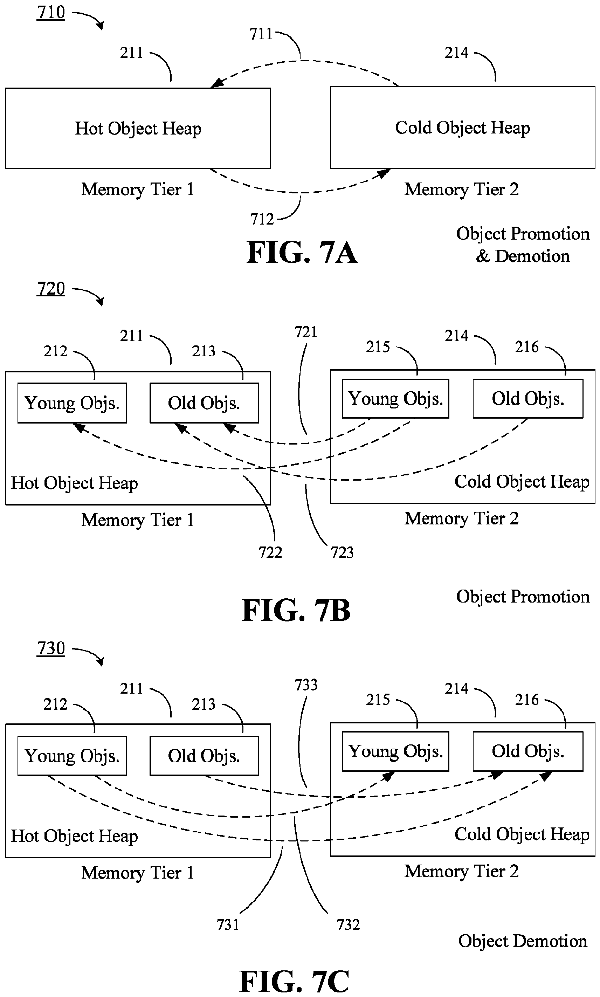

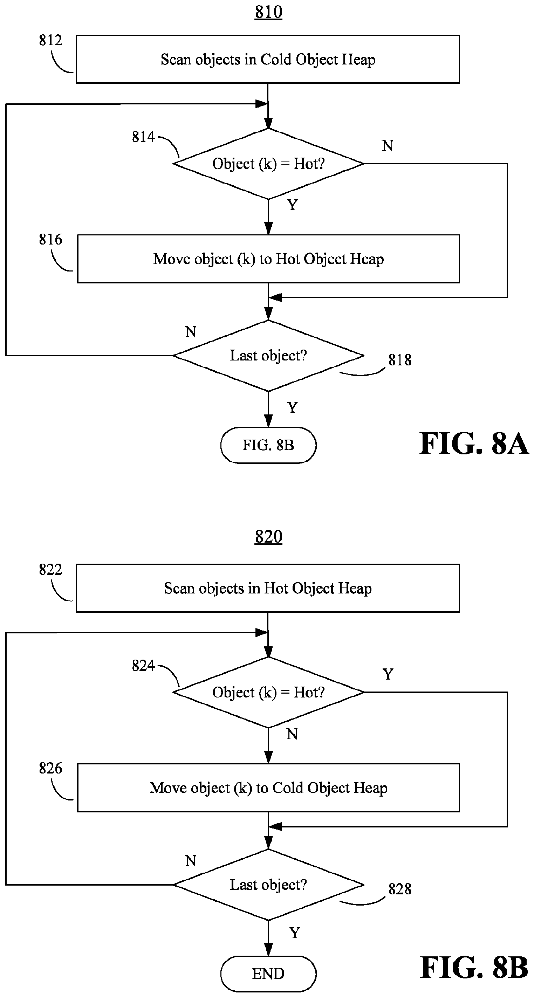

Enhanced garbage collector 123 operates to manage and recycle objects in hot object heap 126 and cold object heap 127. Object migrator 124 operates as part of the garbage collection process to migrate objects between hot object heap 126 and cold object heap 127, based on a hotness score for each object. Enhanced garbage collector 123 may run in an execution thread independent of an execution thread for JIT compiler 112 and object allocation redirector 122. Additional details and features of enhanced garbage collector 123 (including object migrator 124) are further described below with reference to FIGs. 7A-7C and 8A-8D.

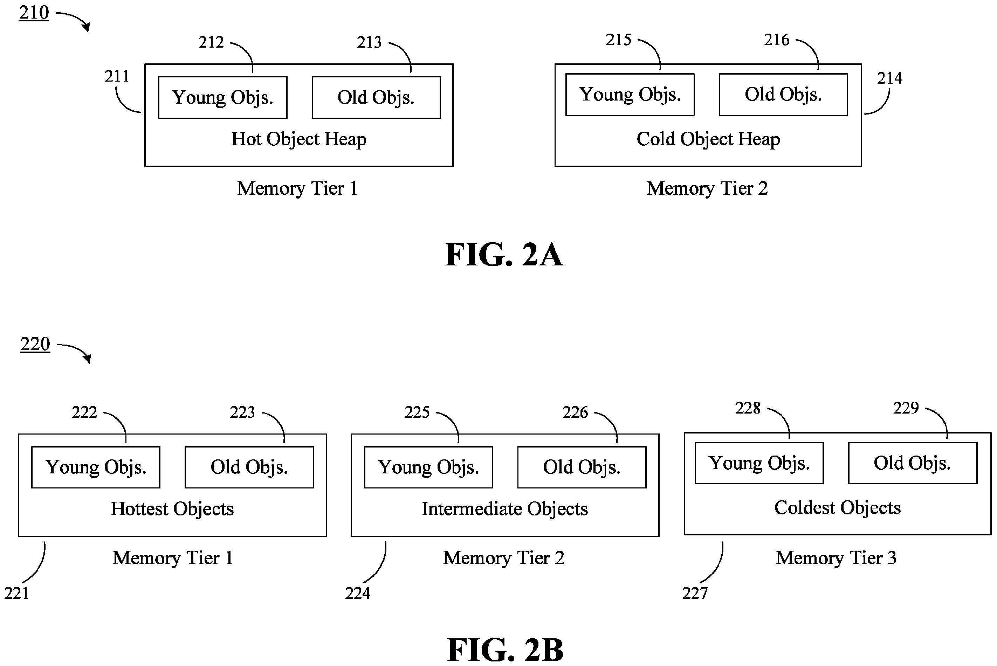

Hot object heap 126 may store hot objects in a first memory tier, labeled as Memory Tier 1. Cold object heap 127 may store cold objects in a second memory tier, labeled as Memory Tier 2. Memory tier 1 may include memory components of a different type or quality as compared to memory components of Memory tier 2. For example, on the one hand memory tier 1 may include memory components having higher performance, higher cost and/or lower capacity, while on the other hand memory tier 2 may include memory components having lower cost, lower performance and/or higher capacity. For example, memory tier 1 may have a tight constraint on capacity (e.g., due to higher cost), while memory tier 2 may be more abundant (e.g., due to lower cost). As an illustration, memory tier 1 may include DRAM (dynamic random access memory), while memory tier 2 may include Intel^{®} Optane^{™} memory. As another illustration, memory tier 1 may include eDRAM (embedded DRAM), while memory tier 2 may include traditional DRAM. Other memory tier combinations are possible. Additional details and features of hot object heap 126 and cold object heap 127 are further described below with reference to FIGs. 2 and 7A-7C.

FIG. 2A shows a block diagram illustrating example tiered object memory placement within a hybrid memory architecture 210 according to one or more embodiments, with reference to components and features described above including but not limited to the figures and associated description. Hybrid memory architecture 210 may include a hot object heap 211 maintained in a first memory tier (labeled as memory tier 1) and a cold object heap 214 maintained in a second memory tier (labeled as memory tier 2). It will be understood that, in some embodiments, the hybrid memory architecture may have more than 2 memory tiers; for example, 3 memory tiers are shown in FIG. 2B as discussed below. While memory tier 1 and memory tier 2 are illustrated as blocks of equal size, it will be understood that memory tier 1 and memory tier 2 may each have the same memory size/capacity or may have different memory size/capacity. The size/capacity for each memory tier may be chosen based on performance and/or cost considerations. For example, if high performance (e.g., bandwidth, access latency, etc.) is desired, a relatively higher ratio of tier 1 memory (higher-performing memory) to tier 2 memory (lower-performing memory) may be chosen. As another example, if lower overall cost is desired, a relatively lower ratio of tier 1 memory (higher cost) to tier 2 memory (lower cost) may be chosen.

Hot object heap 211 may store objects designated as hot objects. Cold object heap 214 may store objects designated as cold objects. Hot object heap 211 may be hot object heap 126, and cold object heap 214 may be cold object heap 127, each as described above with reference to FIG. 1B. As described above, objects designated as hot objects are those objects that are likely to be accessed more often than other objects. Objects designated as cold objects are those objects that are likely to be accessed less often than other objects. Each object may include a hotness score which may be used in determining whether an object is designated as hot or cold. An object's hotness score may be based, e.g., on whether the object was created or allocated by a hot method, and/or the frequency of object invocation or access.

Object classes are organized to contain most related methods and their related data, and different classes have least data-interdependency. That is, a method in one class doesn't access a data field in another class directly; instead, it accesses through well-defined interfaces/methods such as getField() and setField(). If the class instance a hot method belongs to is considered a hot object, the memory placement of hot objects (i.e., accessed by hot methods) are most likely to impact overall performance. Of note, second layer object access (i.e., a reference of another object's data from a hot object). may be naturally captured when that object's getField()/setField() become hot methods.

Accordingly, apportioning objects between memory tiers based on an object's hotness promotes the ability to optimize or enhance performance and/or cost for a hybrid memory architecture. For example, allocating hot objects to a higher-performing memory tier will promote improved overall performance, since those objects accessed (or likely to be accessed) frequently will have a greater impact on performance compared to objects accessed less frequently. Similarly, allocating cold objects to a lower cost (but lower-performing) memory tier will have a lesser impact on overall performance, since any performance difference for infrequently-accessed objects would not be likely to add up to a significant difference in overall performance; yet allocating cold objects to a lower cost memory tier will be more cost effective than placing those cold objects in a more costly memory tier. Overall, the tiered object memory placement techniques described herein may provide for reduced cost of memory while minimizing any degradation of performance caused through use of lower-performing memory in a memory tier.

In one or more embodiments, objects may additionally have a designation as young or old, based on the relative age of the object (e.g., the length of time since the object was created or allocated). Objects may include a parameter or field which may be marked (or flagged) to indicate whether the object is young or old. There may be many ways to handle objects flagged as young or old, respectively, including but not limited to organizing them into separate spaces or storage areas. As shown in FIG. 2A, hot object heap 211 may include young objects 212 (i.e., objects designated as young) and old objects 213 (i.e., objects designated as old). Similarly, cold object heap 214 may include young objects 215 (i.e., objects designated as young) and old objects 216 (i.e., objects designated as old). While objects may be conceptually organized in terms of a young object heap (containing young objects) and an old object heap (containing old objects), the relative age of objects may have little (or nothing) to do with an object's frequency of access or hotness. For example, some young objects may have been in existence only a short time but may be accessed frequently (or infrequently). In contrast, some old objects may have been in existence a relatively long period of time but may be accessed only infrequently (or in some examples, frequently). Thus, if a goal is to optimize or enhance memory performance and/or low cost in a hybrid memory architecture, an object's age (young vs. old) does not present a good basis for apportioning objects between different memory tiers. Accordingly, memory tier 1 and memory tier 2 may each contain both young and old objects. It will be understood that a particular memory tier may only contain young objects, or may only contain old objects.

FIG. 2B shows a block diagram illustrating example tiered object memory placement within a hybrid memory architecture 220 according to one or more embodiments, with reference to components and features described above including but not limited to the figures and associated description. Hybrid memory architecture 220 may include a first object heap 221 maintained in a first memory tier (labeled as memory tier 1), a second object heap 224 maintained in a second memory tier (labeled as memory tier 2), and a third object heap 227 maintained in a third memory tier (labeled as memory tier 3). The first object heap 221 may contain the hottest objects, the second object heap 224 may contain objects of an intermediate level of hotness, and the third object heap 227 may contain the coldest objects - in each case based on object hotness scores. While memory tier 1, memory tier 2 and memory tier 3 are illustrated as blocks of equal size, it will be understood that the memory tiers may each have the same memory size/capacity or may have different memory size/capacity. The size/capacity for each memory tier may be chosen based on performance and/or cost considerations.

In one or more embodiments, objects may additionally have a designation as young or old, based on the relative age of the object (e.g., the length of time since the object was created or allocated) as discussed above. As shown in FIG. 2B, the first object heap 221 may contain young objects 222 (i.e., objects designated as young) and old objects 223 (i.e., objects designated as old); similarly, the second object heap 224 may contain young objects 225 and old objects 226, and the third object heap 227 may contain young objects 228 and old objects 229. As discussed above, objects may be conceptually organized in terms of a young object heap (containing young objects) and an old object heap (containing old objects); but because the relative age of objects may have little (or nothing) to do with an object's frequency of access or hotness, an object's age (young vs. old) may not present a good basis for apportioning objects between different memory tiers. Accordingly, each memory tier may contain both young and old objects. It will be understood that some memory tier(s) may only contain young objects, or may only contain old objects.

FIG. 3 shows a block diagram illustrating functionality of an example hot object profiler 121 according to one or more embodiments, with reference to components and features described above including but not limited to the figures and associated description. An object may have a hotness score based, e.g., on whether the object was created or allocated by a hot method, and/or the frequency of object invocation or access. Hot object profiler 121 receives from hot method profiler 111 methods identified as hot methods based on the frequency of method calls. The hot methods from hot method profiler 111 may be received as a list of methods, such as, for example:

```
      hot_method_list:
      {
      method_1,
      method_2,
      ...
      method_i,
      ...
      }
```

These hot methods are used by hot profiler 121 to efficiently identify hot objects. For each received hot method, hot object profiler 121 may identify internal objects 311, which are objects that are allocated (created) internally within the method, and external objects 312, which are objects allocated (created) externally to the method and passed to the method as arguments in the method call. For each internal object 311, hot object profiler 121 may identify the internal object type (or class) as hot (label 313). This identification may be used by object allocation redirector 122 in allocating objects newly-created (by the hot method) of that object type to the hot object heap, as described further below.

For each external object 312, hot object profiler 121 may count the invocation of each object referenced as an argument (label 314). In some embodiments, hot object profiler 121 may generate a weighted list of objects based on invocation frequency, such as, e.g.:

```
      external_obj_list(i) [with method_i from hot_method_list]
      {method_i, eobject_1, weight_1(%)}
      {method_i, eobject_2, weight_2(%)}
      {method_i, eobject_3, weight_3(%)}.
```

Hot object profiler 121 may then apply a filter (label 315) to cull out objects having lower invocation frequency (or lower weight in the weighted list), resulting in objects having higher invocation frequency (or higher weight in the weighted list) which may then be assigned a hotness score attributable to hot objects (label 316). Object filtering may be based on a threshold (e.g., a predetermined threshold) of weight (%), or may be performed dynamically based on memory tier budgets or relative memory tier availability. Hot object profiler 121 may assign a hotness score to each such hot object. As an example, the hotness score assigned to the hot objects may be a value of 2. The lower invocation frequency (or lower weight) objects culled out by filter 315 may be assigned a hotness score attributable to cold objects (label 317) by hot object profiler 121, and each such cold object may be assigned a hotness score; as an example, the hotness score assigned to the cold objects may be a value of 0. Objects identified as hot objects or cold objects by hot object profiler 121 may remain in their current memory location (current object heap), subject to migration (relocation) to the appropriate hot/cold object heap in a subsequent garbage collection cycle by enhanced garbage collector 123.

Hot object profiler 121 may also monitor heap objects (label 318) and update a hotness score for one or more monitored objects. Monitored heap objects may include objects in hot object heap 126 and /or objects in cold object heap 127. For each monitored heap object, hot object profiler 121 may count the invocation of each object. Hot object profiler 121 may then modify a hotness score based on counting invocation by hot methods. In some embodiments, the hotness score for objects may be increased for objects invoked by a hot method (e.g., increasing hotness score by 1), and the hotness score for objects may be decreased for objects not currently invoked by a hot method (e.g., decreasing hotness score by 1). In some embodiments, the hotness score for objects may be reset to a hot value for objects invoked by a hot method (e.g., reset hotness to a value of 2), and the hotness score for objects may be reset to a cold value for objects not currently invoked by a hot method (e.g., reset hotness to a value of 0).

FIG. 4 is a flowchart illustrating a method 410 carried out by an example hot object profiler 121 according to one or more embodiments, with reference to components and features described above including but not limited to the figures and associated description. At block 412, hot object profiler 121 may receive a list of hot methods. The list of hot methods may be obtained from hot method profiler 111. Each hot method_i in the list of received hot methods may be evaluated as now described.

At block 414, each internal object (e.g., of internal objects 311) for received hot method_i may be identified as a hot object. Hot object profiler 121 may assign a hotness score to each such internal object identified as a hot object (e.g., the hotness score assigned to the hot internal objects may be a value of 1).

At block 416, hot object profiler 121 may count the invocation of each external argument referenced as an argument in hot method_i. In some embodiments, hot object profiler 121 may generate a weighted list of objects based on invocation frequency.

At block 418, hot object profiler 121 may determine if it has reached the end of the list of hot methods. If no, the process may return to block 414 and evaluate the next hot method in the hot method list. If yes, the process may continue with block 420.

At block 420, hot object profiler 121 may identify external objects as hot (or cold) based on invocation frequency. Hot object profiler 121 may filter out objects having lower invocation frequency (or lower weight in the weighted list), resulting in objects having higher invocation frequency (or higher weight in the weighted list) which may then be identified as hot objects. Hot object profiler 121 may assign a hotness score to each such hot object for indicating the object as hot (e.g., the hotness score assigned to the hot external objects may be a value of 2). External objects that are filtered out -- i.e., having a lower invocation frequency or lower weight may be identified as cold objects, and hot object profiler 121 may assign a hotness score (e.g., a value of 0) to each of the objects identified as cold objects.

FIG. 5A illustrates an example extended object structure 510 according to one or more embodiments, with reference to components and features described above including but not limited to the figures and associated description. Each object may have an original object structure 511 as may be designed or otherwise determined for a particular program or application. Two fields may be appended to original object structure 511 for each object: object allocation address 512 and object hotness 513. Object allocation address 512 provides an address for the object's allocation - i.e., the address for the instruction that allocates (creates) the object. Object hotness 513 provides for a value that indicates the hotness of an object such as, e.g., the hotness score for an object as described above. Object hotness 513 may have an initial value assigned upon allocation (creation) of the object. Different object allocators may assign different values to object hotness 513 upon allocation of an object. In some embodiments, as a default position, upon initial allocation an object may be considered cold and a default value for object hotness may be set to 0, unless the object is otherwise identified as hot. Object hotness 513 may be accessed or modified by hot object profiler 121, object allocation redirector 122, and enhanced garbage collector 123.

FIG. 5B illustrates example extensions 520 to native code functions according to one or more embodiments, with reference to components and features described above including but not limited to the figures and associated description. Native code functions 521 may include any functions written or compiled in native code (i.e., code for a particular computing platform or environment), and may include functions as compiled at runtime by JIT compiler 112. Two allocation functions may be added to provide an extended set of native code functions: hot_heap_allocator (size, hotness) (label 522) and cold_heap_allocator (size, hotness) (label 523). The size parameter represents the amount of memory to be allocated for that object. The hotness parameter represents an initial hotness score that may be assigned to the object (e.g., via object hotness 513) upon allocation. The function hot_heap_allocator () may be called to allocate hot objects in a hot object heap (e.g., hot object heap 126). The function cold_heap_allocator () may be called to allocate cold objects in a cold object heap (e.g., cold object heap 127). Object allocation redirector 122 may redirect allocation for hot external objects 524 (such as hot external objects identified as described above) to allocation function hot_heap_allocator (size, hotness=2), and for hot internal objects 525 (such as hot internal objects identified as described above) to allocation function hot_heap_allocator (size, hotness=1). Allocation for other objects 526 not identified as hot may be directed to cold_heap_allocator (size, hotness=0), which may be a default native code allocator.

FIG. 5C illustrates example extensions 530 to byte-code functions according to one or more embodiments, with reference to components and features described above including but not limited to the figures and associated description. Byte-code functions 531 may include any functions written or compiled into a set of machine-independent instructions to be interpreted by the runtime environment of a virtual machine (e.g., Java Virtual Machine) during execution. Two allocation functions may be added to provide an extended set of byte-code functions: new_instance_hot () (label 532) and new_instance_cold () (label 533). Similar to the native code function extensions described above, parameters for memory size and object hotness may be included with each of the extended byte-code functions. The function new_instance_hot () may be called to allocate hot objects in a hot object heap (e.g., hot object heap 126). The function new_instance_cold () may be called to allocate cold objects in a cold object heap (e.g., cold object heap 127). Object allocation redirector 122 may redirect allocation for hot external objects 534 (such as external objects identified as hot but where the method is not a hot method) to allocation function new_instance_hot (). Allocation for other objects 535 not identified as hot may be directed to new_instance_cold (), which may be a default byte-code allocator.

FIG. 6 is a flowchart illustrating an example method 610 carried out by object allocation redirector 122 according to one or more embodiments, with reference to components and features described above including but not limited to the figures and associated description. Object allocation redirection according to method 610 may handle object allocation for hot objects identified by hot object profiler 121. Default allocation for cold objects (or any objects not identified as hot objects) may be handled by calls to cold_heap_allocator () (for native code calls) or new_instance_cold () (for byte-code calls), as described above.

At block 611, a method_i to which an allocation address belongs is examined.

At block 612, a query is made to determine whether the method_i has already been compiled to native code via JIT compilation (e.g., method_i is a hot method). If yes, the process may continue with block 613; if no, the process may continue with block 614.

At block 613, native code functions are executed via JIT compilation. A call to cold_heap_allocator () may be replaced with (i.e., redirected to) a call to hot_heap_allocator (), which will allocate the object to hot object heap 126.

At block 614, it is determined whether the method_i is going to be compiled to native code via JIT compilation (e.g., method_i is newly-identified as a hot method). If no, the process may continue with block 615; if yes, the process may continue with block 616.

At block 615, byte-code functions are executed via interpretation by the runtime environment of the virtual machine. A call to new_instance_cold () may be replaced with (i.e., redirected to) a call to new_instance_hot (), which will allocate the object to hot object heap 126.

At block 616, byte-code functions are executed via interpretation by the runtime environment of the virtual machine, but the respective method is to be compiled to native code by JIT compiler 112 for execution. A call to new_instance_cold () may be compiled to a native code call to hot_heap_allocator (), which will allocate the object to hot object heap 126.

FIGs. 7A-7C illustrate example object migration according to one or more embodiments, with reference to components and features described above including but not limited to the figures and associated description. Object migration may be carried out by object migrator 124 (part of enhanced garbage collector 123) during a garbage collection process when objects may be scanned or reviewed. Migrating objects from cold object heap to hot object heap may be considered a process of object promotion. Migrating objects from hot object heap to cold object heap may be considered a process of object demotion.

In FIG. 7A, object migration 710 illustrates migrating objects between hot object heap 211 and cold object heap 214, without consideration of any generational designation of objects (i.e., young objects or old objects). During the garbage collection process, if an object identified as a hot object (e.g., object hotness exceeds a threshold value, such a 0) is resident in cold object heap 214, object migrator 124 moves that object to hot object heap 211 (i.e., object promotion) (label 711). Similarly, during the garbage collection process if an object identified as a cold object (e.g., object hotness equal to or less than a threshold value, such as 0) is resident in hot object heap 211, object migrator 124 moves that object to cold object heap 214 (i.e., object demotion) (label 712).

In FIG. 7B, object migration 720 illustrates promoting objects to hot object heap 211 from cold object heap 214, where hot object heap 211 may have young objects 212 and old objects 213, and cold object heap 214 may have young objects 215 and old objects 216. During the garbage collection process, if a young object 215 resident in cold object heap 214 is identified as a hot object, object migrator 124 will move that object to hot object heap 211. If the hot object has aged, the object will be stored as a hot old object 213 (label 721). However, if the hot object has not aged, the object will be stored as a hot young object 212 (label 722). In some embodiments, if a cold old object 216 is identified as a hot object, the object may be promoted to hot old objects 213 during the garbage collection process (label 723).

In FIG. 7C, object migration 730 illustrates demoting objects to cold object heap 214 from hot object heap 211, where hot object heap 211 may have young objects 212 and old objects 213, and cold object heap 214 may have young objects 215 and old objects 216. During the garbage collection process, if a young object 212 resident in hot object heap 211 is identified as a cold object, object migrator 124 will move that object to cold object heap 214. If the cold object has aged, the object will be stored as a cold old object 216 (label 731). However, if the cold object has not aged, the object will be stored as a cold young object 215 (label 732). Also during the garbage collection process, if an old object 213 resident in hot object heap 211 is identified as a cold object, object migrator 124 will move that object to cold object heap 214 as an old object 216.

In some embodiments, migrating objects between hot object heap 211 and cold object heap 214 may include moving a first object from the cold object heap to the hot object heap if the hotness score associated with the first object is greater than a threshold value, and may include moving a second object from the hot object heap to the cold object heap if the hotness score associated with the second object is less than or equal to the threshold value. In some embodiments, the threshold value may be determined based on a size of the first tier memory. For example, for a larger first tier memory the hot object heap can hold a greater number of hot objects, so the hotness threshold may be set lower which would result in more hot objects in the hot object heap. As another example, for a smaller first tier memory the hot object heap can only hold a lower number of hot objects, so the hotness threshold may be set higher which would result in fewer hot objects in the hot object heap. In some embodiments, the threshold value may be determined based on a relative capacity of the first tier memory and the second tier memory. In some embodiments, the threshold value may be determined based on workload characteristics, such as to capture as hot objects specific object types used frequently.

FIGs. 8A-8D provide flowcharts illustrating operation of an example object migrator according to one or more embodiments, with reference to components and features described above including but not limited to the figures and associated description, with reference to components and features described above including but not limited to the figures and associated description. Object migration may be carried out by object migrator 124 (part of enhanced garbage collector 123) during a garbage collection process.

FIG. 8A is a flowchart illustrating a method 810 of object migration, which involves object promotion without regard to object age. At block 812, objects in the cold object heap (such as cold object heap 214) are scanned.

At block 814, a query is made to determine whether a scanned object (k) is a hot object. If yes (i.e., the object is now hot), the process may continue with block 816; if no (i.e., the object remains cold), the process may continue with block 818.

At block 816, the hot object (k) is moved (i.e., promoted) from the cold object heap and stored in the hot object heap (such as hot object heap 211).

At block 818, enhanced garbage collector 123 may determine if it has reached the end of the objects in the cold object heap. If no, the process may return to block 814 and evaluate the next object in the cold object heap. If yes, the process may continue with the procedures as described below with reference to FIG. 8B. It will be understood that objects in the heap may be scanned as a group and then evaluated one object at a time, or each object in the heap may be scanned and evaluated one object at a time.

FIG. 8B is a flowchart illustrating a method 820 of object migration, which involves object demotion without regard to object age. At block 822, objects in the hot object heap (such as hot object heap 211) are scanned.

At block 824, a query is made to determine whether a scanned object (k) is a hot object. If no (i.e., the object is now cold), the process may continue with block 826; if yes (i.e., the object remains hot), the process may continue with block 828.

At block 826, the hot object (k) is moved (i.e., demoted) from the hot object heap and stored in the cold object heap (such as cold object heap 214).

At block 828, enhanced garbage collector 123 may determine if it has reached the end of the objects in the hot object heap. If no, the process may return to block 824 and evaluate the next object in the hot object heap. If yes, the process may end. It will be understood that objects in the heap may be scanned as a group and then evaluated one object at a time, or each object in the heap may be scanned and evaluated one object at a time. It will be further understood that the processes outlined in method 810 and in method 820 may be combined into a single process for object promotion and demotion as part of the garbage collection process.

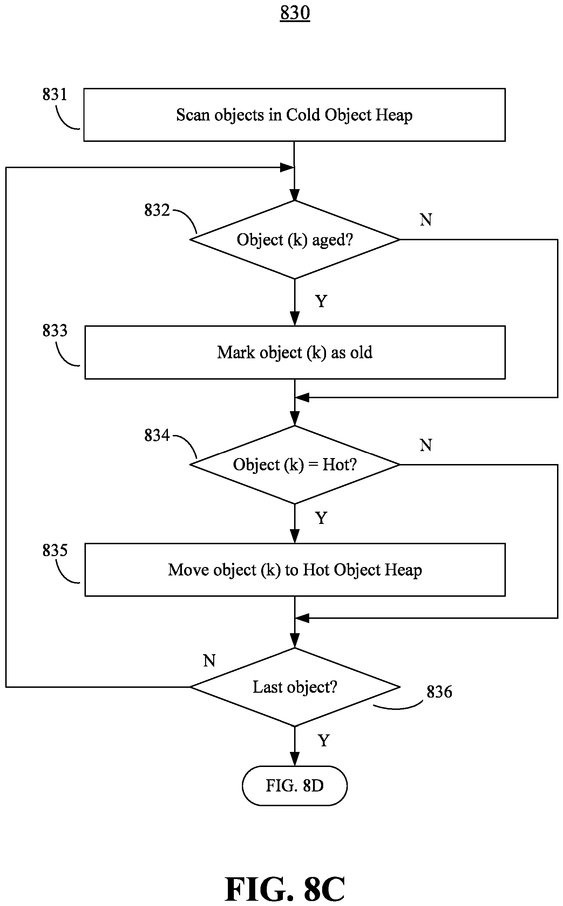

FIG. 8C is a flowchart illustrating a method 830 of object migration, which involves object promotion with consideration of object age. At block 831, objects in the cold object heap 214 (which may include young objects 215 and/or old objects 216) are scanned.

At block 832, a query is made to determine whether a scanned object (k) has aged. If yes (i.e., the object is now old), the process may continue with block 833; if no (i.e., the object remains young), the process may continue with block 834. In some embodiments, if the object is already marked as old the procedures regarding object age at blocks 832-833 may be skipped. In some embodiments, the procedures regarding object age at blocks 832-833 may be carried out instead as a separate process regarding monitoring object age.

At block 833, object (k) may be marked (or flagged) as an old object. For example, a parameter or field of object (k) may be changed from an indication as a young object to an indication of an old object.

At block 834, a query is made to determine whether the scanned object (k) is a hot object. If yes (i.e., the object is now hot), the process may continue with block 835; if no (i.e., the object remains cold), the process may continue with block 836.

At block 835, the hot object (k) is moved (i.e., promoted) from the cold object heap and stored in the hot object heap (such as hot object heap 211). If the object (k) is marked as an old object, it will become one of the hot old objects 213; if the object (k) is marked as a young object, it will become one of the hot young objects 212.

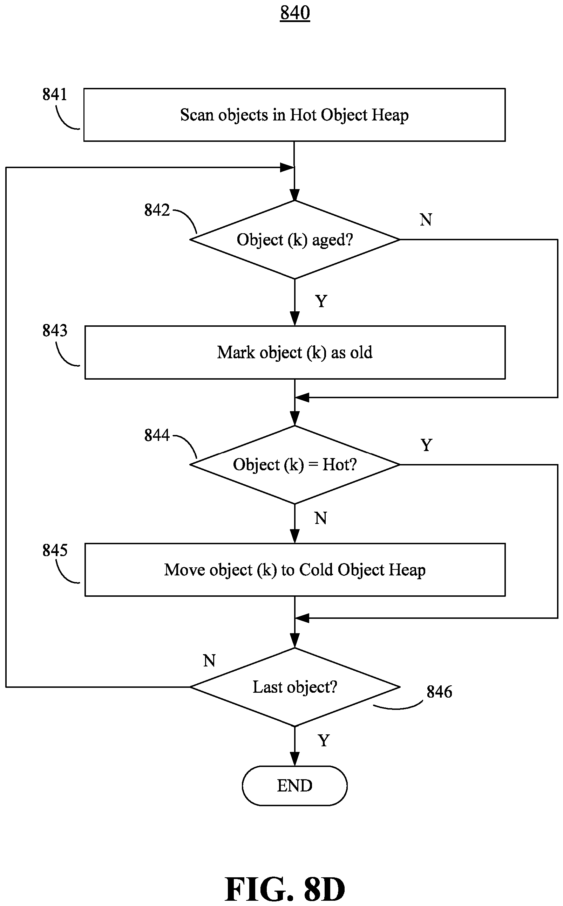

At block 836, enhanced garbage collector 123 may determine if it has reached the end of the objects in the cold object heap. If no, the process may return to block 832 and evaluate the next object in the cold object heap. If yes, the process may continue with the procedures described below with reference to FIG. 8D. It will be understood that objects in the heap may be scanned as a group and then evaluated one object at a time, or each object in the heap may be scanned and evaluated one object at a time. It will be further understood that the order of considering object age and object hotness may be reversed. In some embodiments, if a cold old object 216 is identified as a hot object, the object may be promoted to hot old objects 213 using a similar process as described with reference to FIG. 8A.

FIG. 8D is a flowchart illustrating a method 840 of object migration, which involves object demotion with consideration of object age. At block 841, objects in the hot object heap 211 (which may include young objects 212 and/or old objects 213) are scanned.

At block 842, a query is made to determine whether a scanned object (k) has aged. If yes (i.e., the object is now old), the process may continue with block 843; if no (i.e., the object remains young), the process may continue with block 844. In some embodiments, if the object is already marked as old the procedures regarding object age at blocks 842-843 may be skipped. In some embodiments, the procedures regarding object age at blocks 842-843 may be carried out instead as a separate process regarding monitoring object age.

At block 843, object (k) may be marked (or flagged) as an old object. For example, a parameter or field of object (k) may be changed from an indication as a young object to an indication of an old object.

At block 844, a query is made to determine whether the scanned object (k) is a hot object. If no (i.e., the object is now cold), the process may continue with block 845; if yes (i.e., the object remains hot), the process may continue with block 846.

At block 845, the cold object (k) is moved (i.e., demoted) from the hot object heap and stored in the cold object heap (such as cold object heap 214). If the object (k) is marked as an old object, it will become one of the cold old objects 216; if the object (k) is marked as a young object, it will become one of the cold young objects 215.

At block 846, enhanced garbage collector 123 may determine if it has reached the end of the objects in the hot object heap. If no, the process may return to block 842 and evaluate the next object in the hot object heap. If yes, the process may end. It will be understood that objects in the heap may be scanned as a group and then evaluated one object at a time, or each object in the heap may be scanned and evaluated one object at a time. It will be further understood that the order of considering object age and object hotness may be reversed. It will be further understood that the processes outlined in method 830 and in method 840 may be combined into a single process for object promotion and demotion as part of the garbage collection process.

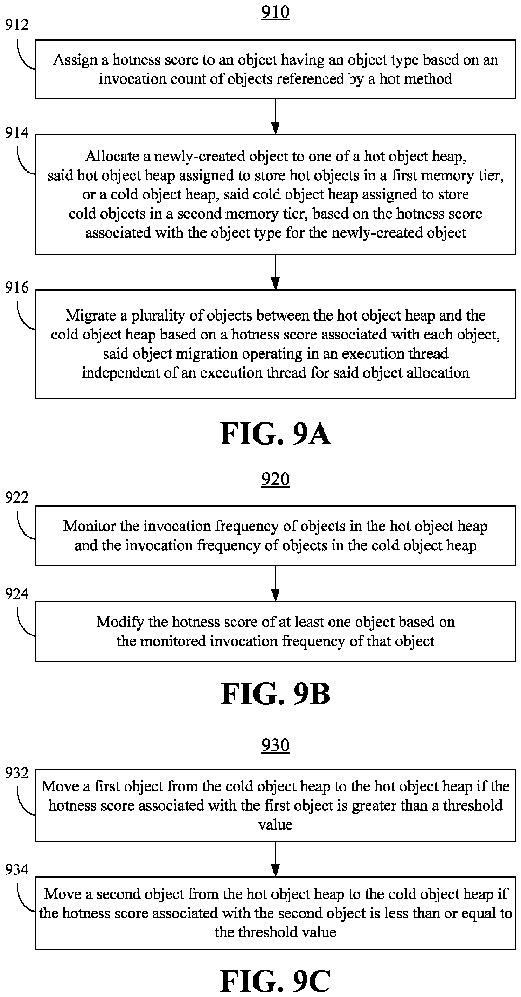

FIG. 9A is a flowchart illustrating a method 910 of operating an example managed runtime computing apparatus with tiered object memory placement according to one or more embodiments, with reference to components and features described above including but not limited to the figures and associated description.

At block 912, the apparatus assigns a hotness score to an object having an object type based on an invocation count of objects referenced by a hot method.

At block 914, the apparatus allocates a newly-created object to one of a hot object heap, said hot object heap assigned to store hot objects in a first memory tier, or a cold object heap, said cold object heap assigned to store cold objects in a second memory tier, based on the hotness score associated with the object type for the newly-created object.

At block 916, the apparatus migrates a plurality of objects between the hot object heap and the cold object heap based on a hotness score associated with each object, said object migration operating in an execution thread independent of an execution thread for said object allocation.

FIG. 9B is a flowchart illustrating a method 920 regarding monitoring heap objects and updating a hotness score for monitored objects, according to one or more embodiments, with reference to components and features described above including but not limited to the figures and associated description. Method 920 may be carried out by, e.g., hot object profiler 121.

At block 922, the apparatus may monitor the invocation frequency of objects in the hot object heap and the invocation frequency of objects in the cold object heap.

At block 924, the apparatus may modify the hotness score of at least one object based on the monitored invocation frequency of that object. In some embodiments, the hotness score for objects may be increased for objects invoked by a hot method (e.g., increasing hotness score by 1), and the hotness score for objects may be decreased for objects not currently invoked by a hot method (e.g., decreasing hotness score by 1). In some embodiments, the hotness score for objects may be reset to a hot value for objects invoked by a hot method (e.g., reset hotness to a value of 2), and the hotness score for objects may be reset to a cold value for objects not currently invoked by a hot method (e.g., reset hotness to a value of 0).

FIG. 9C is a flowchart illustrating a method 930 regarding migrating a plurality of objects in operating an example managed runtime computing apparatus with tiered object memory placement according to one or more embodiments, with reference to components and features described above including but not limited to the figures and associated description. Method 930 may be carried out by, e.g., enhanced garbage collector 123 (including object migrator 124).

At block 932, the apparatus may move a first object from the cold object heap to the hot object heap if the hotness score associated with the first object is greater than a threshold value.

At block 934, the apparatus may move a second object from the hot object heap to the cold object heap if the hotness score associated with the second object is less than or equal to the threshold value.

In some embodiments, the threshold value may be determined based on a relative capacity of the first tier memory and the second tier memory. In some embodiments, allocating a newly-created object to a hot object heap may include replacing a cold object allocator function with a hot object allocator function. In some embodiments, the apparatus may additionally assign a predetermined hotness score for a second newly-created object, the second newly-created object created by the hot method, and allocate the second newly-created object to the hot object heap.

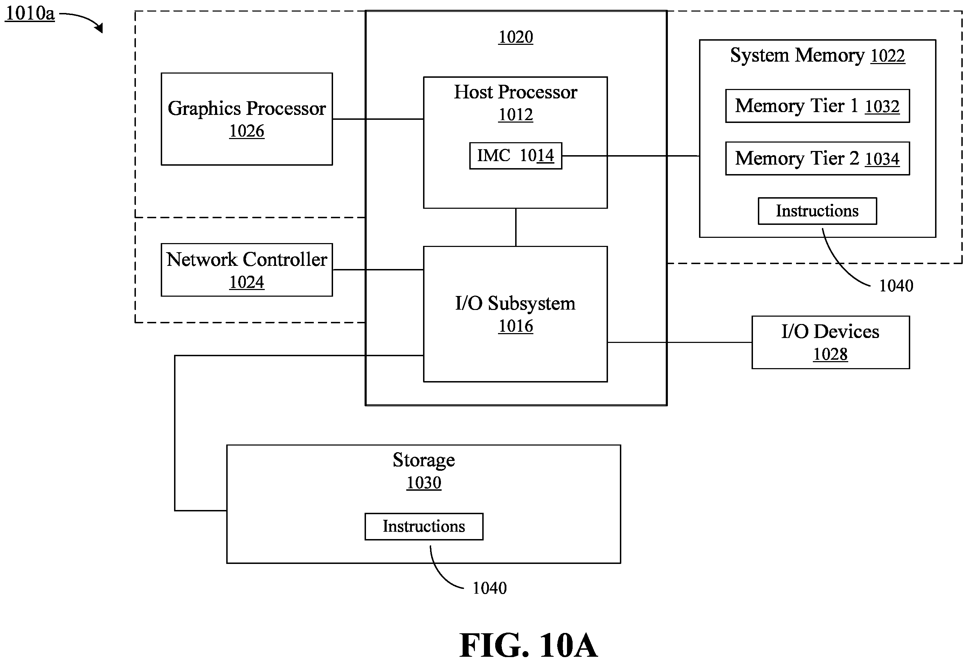

FIGs. 10A-10B each show a block diagram illustrating an example enhanced managed runtime computing system 1010 (labeled 1010a and 1010b respectively as illustrated) with tiered object memory placement according to one or more embodiments, with reference to components and features described above including but not limited to the figures and associated description. System 1010 may generally be part of an electronic device/platform having computing functionality (e.g., server, cloud infrastructure controller, database controller, notebook computer, desktop computer, personal digital assistant/PDA, tablet computer, convertible tablet, smart phone, etc.), imaging functionality (e.g., camera, camcorder), media playing functionality (e.g., smart television/TV), wearable functionality (e.g., watch, eyewear, headwear, footwear, jewelry), vehicular functionality (e.g., car, truck, motorcycle), robotic functionality (e.g., autonomous robot), etc., or any combination thereof. In the illustrated example, system 1010 may include a host processor 1012 (e.g., central processing unit/CPU) having an integrated memory controller (IMC) 1014 that may be coupled to system memory 1022. Host processor 1012 may include any type of processing device, such as, e.g., microcontroller, microprocessor, RISC processor, ASIC, etc., along with associated processing modules or circuitry. System memory 1022 may include any non-transitory machine- or computer-readable storage medium such as RAM, ROM, PROM, EEPROM, firmware, flash memory, etc., configurable logic such as, for example, PLAs, FPGAs, CPLDs, fixed-functionality hardware logic using circuit technology such as, for example, ASIC, CMOS or TTL technology, or any combination thereof suitable for storing instructions 1040.

System 1010 may also include an input/output (I/O) subsystem 1016. I/O subsystem 1016 may communicate with for example, one or more input/output (I/O) devices 1028, a network controller 1024 (e.g., wired and/or wireless NIC), and storage 1030. Storage 1030 may be comprised of any appropriate non-transitory machine- or computer-readable memory type (e.g., flash memory, DRAM, SRAM (static random access memory), solid state drive (SSD), hard disk drive (HDD), optical disk, etc.). Storage 1030 may include mass storage. In some embodiments, host processor 1012 and/ or I/O subsystem 1016 may communicate with storage 1030 (all or portions thereof) via network controller 1024. In some embodiments, system 1010 may also include a graphics processor 1026.

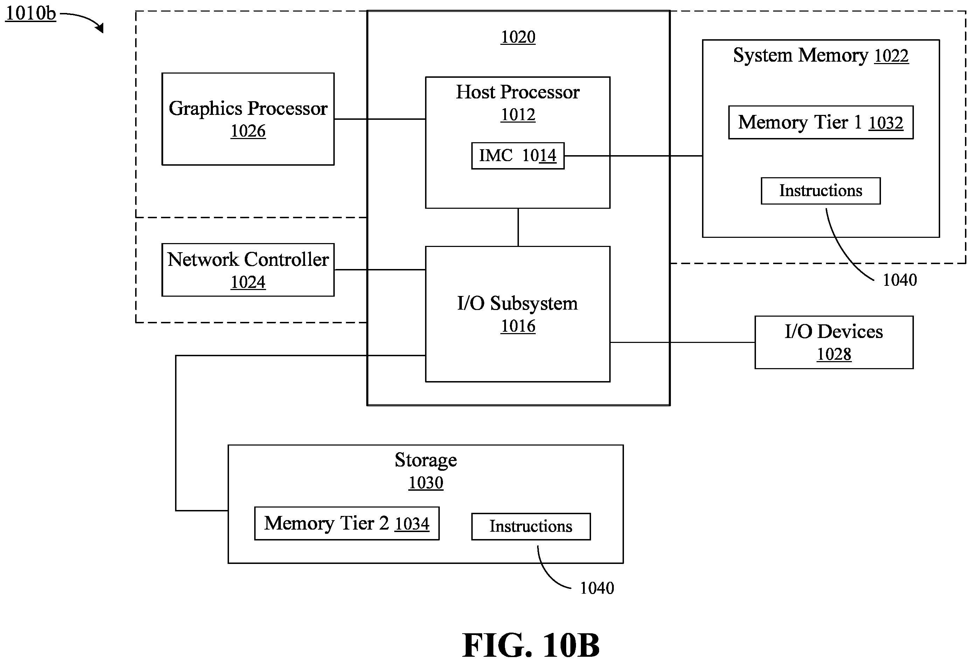

System 1010 may include two or more memory tiers, such as a first memory tier 1032 (labeled as Memory Tier 1) and a second memory tier 1034 (labeled as Memory Tier 2). First memory tier 1032 may be comprised of a different memory type than second memory tier 1034. As illustrated in FIG. 10A, system 1010 (labeled as 1010a) may include both first memory tier 1032 and second memory tier 1034 as part of system memory 1022. In the configuration illustrated in FIG. 10A, for example, first memory tier 1032 may include embedded DRAM, while second memory tier 1034 may include traditional DRAM. As illustrated in FIG. 10B, system 1010 (labeled as 1010b) may include first memory tier 1032 as part of system memory 1022 and second memory tier 1034 as part of storage 1030. In the configuration illustrated in FIG. 10B, for example, first memory tier 1032 may include high-performing DRAM, while second memory tier 1034 may include Intel^{®} Optane^{™} memory. Other memory tier configurations are possible. In some embodiments, first memory tier 1032 and second memory tier 1034 may be organized as a database.

Host processor 1012 and/or I/O subsystem 1016 may execute program instructions 1040 retrieved from system memory 1022 and/or storage 1030 to perform one or more aspects of the processes described above, including processes for hot object profiling described with reference to FIGs. 3-4, processes for object allocation redirection described with reference to FIGs. 5A-5C and 6, processes for object migration described with reference to FIGs. 7A-7C and 8A-8D. Host processor 1012 and/or I/O subsystem 1016 may execute program instructions 1040 retrieved from system memory 1022 and/or storage 1030 to perform one or more aspects of the processes for operating a managed runtime computing apparatus described above with reference to FIGs. 9A-9C. In some embodiments, graphics processor 1026 may execute program instructions 1040 retrieved from the system memory 1022 and/or storage 1030.

Computer program code to carry out the processes described above may be written in any combination of one or more programming languages, including an object-oriented programming language such as JAVA, JAVASCRIPT, PYTHON, SMALLTALK, C++ or the like and/or conventional procedural programming languages, such as the "C" programming language or similar programming languages, and implemented as program instructions 1040. Additionally, program instructions 1040 may include assembler instructions, instruction set architecture (ISA) instructions, machine instructions, machine dependent instructions, microcode, state-setting data, configuration data for integrated circuitry, state information that personalizes electronic circuitry and/or other structural components that are native to hardware (e.g., host processor, central processing unit/CPU, microcontroller, microprocessor, etc.).

Host processor 1012 and I/O subsystem 1016 may be implemented together on a semiconductor die as a system on chip (SoC) 1020, shown encased in a solid line. SoC 1020 may therefore operate as a managed runtime computing apparatus. In some embodiments, SoC 1020 may also include one or more of system memory 1022, network controller 1024, and/or graphics processor 1026 (shown encased in dotted lines).

I/O devices 1028 may include one or more of input devices, such as a touch-screen, keyboard, mouse, cursor-control device, touch-screen, microphone, digital camera, video recorder, camcorder, biometric scanners and/or sensors; input devices may be used to enter information and interact with system 1010 and/or with other devices. I/O devices 1028 may also include one or more of output devices, such as a display (e.g., touch screen, liquid crystal display/LCD, light emitting diode/LED display, plasma panels, etc.), speakers and/or other visual or audio output devices. Input and/or output devices may be used, e.g., to provide a user interface.

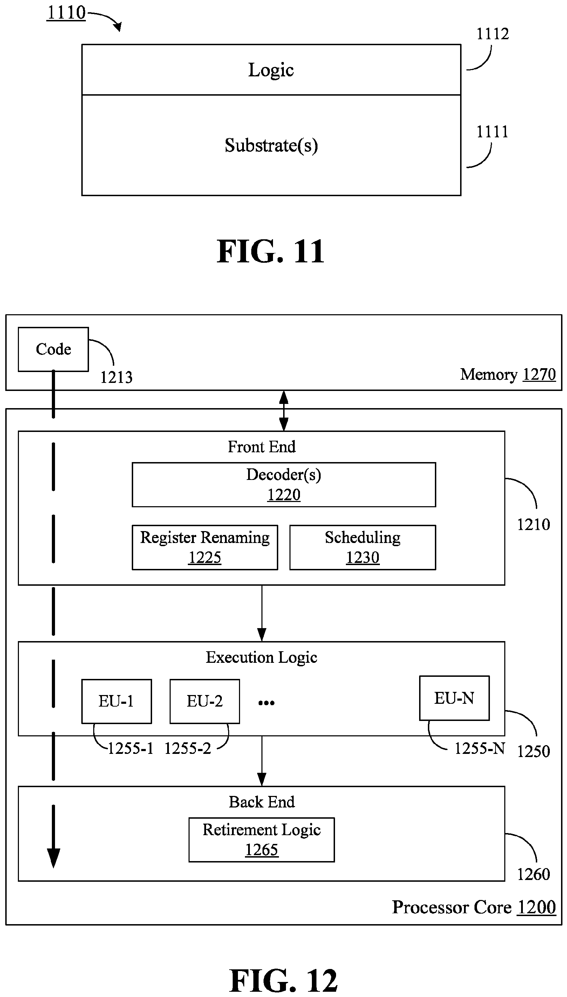

FIG. 11 shows a block diagram illustrating an example semiconductor apparatus 1110 for managing a runtime computing environment having tiered object memory placement according to one or more embodiments, with reference to components and features described above including but not limited to the figures and associated description. Semiconductor apparatus 1110 may be implemented, e.g., as a chip, die, or other semiconductor package. Semiconductor apparatus 1110 may include one or more substrates 1111 comprised of, e.g., silicon, sapphire, gallium arsenide, etc. Semiconductor apparatus 1110 may also include logic 1112 comprised of, e.g., transistor array(s) and other integrated circuit (IC) components) coupled to the substrate(s) 1111. Logic 1112 may implement system on chip (SoC) 1020 described above with reference to FIG. 10. Logic 1112 may implement one or more aspects of the processes described above, including processes for hot object profiling described with reference to FIGs. 3-4, processes for object allocation redirection described with reference to FIGs. 5A-5C and 6, processes for object migration described with reference to FIGs. 7A-7C and 8A-8D. Logic 1112 may implement one or more aspects of the processes for operating a managed runtime computing apparatus described above with reference to FIGs. 9A-9C.

Semiconductor apparatus 1110 may be constructed using any appropriate semiconductor manufacturing processes or techniques. Logic 1112 may be implemented at least partly in configurable logic or fixed-functionality hardware logic. For example, logic 1112 may include transistor channel regions that are positioned (e.g., embedded) within substrate(s) 1111. Thus, the interface between logic 1112 and substrate(s) 1111 may not be an abrupt junction. Logic 1112 may also be considered to include an epitaxial layer that is grown on an initial wafer of substrate(s) 1112.

FIG. 12 is a block diagram illustrating an example processor core 1200 according to one or more embodiments, with reference to components and features described above including but not limited to the figures and associated description. Processor core 1200 may be the core for any type of processor, such as a microprocessor, an embedded processor, a digital signal processor (DSP), a network processor, or other device to execute code. Although only one processor core 1200 is illustrated in FIG. 12, a processing element may alternatively include more than one of the processor core 1200 illustrated in FIG. 12. Processor core 1200 may be a single-threaded core or, for at least one embodiment, processor core 1200 may be multithreaded in that it may include more than one hardware thread context (or "logical processor") per core.

FIG. 12 also illustrates a memory 1270 coupled to processor core 1200. Memory 1270 may be any of a wide variety of memories (including various layers of memory hierarchy) as are known or otherwise available to those of skill in the art. Memory 1270 may include one or more code 1213 instruction(s) to be executed by processor core 1200. Code 1213 may implement one or more aspects of the processes described above, including processes for hot object profiling described with reference to FIGs. 3-4, processes for object allocation redirection described with reference to FIGs. 5A-5C and 6, processes for object migration described with reference to FIGs. 7A-7C and 8A-8D. Code 1213 may implement one or more aspects of the processes for operating a managed runtime computing apparatus described above with reference to FIGs. 9A-9C. Processor core 1200 follows a program sequence of instructions indicated by code 1213. Each instruction may enter a front end portion 1210 and be processed by one or more decoders 1220. Decoder 1220 may generate as its output a micro operation such as a fixed width micro operation in a predefined format, or may generate other instructions, microinstructions, or control signals which reflect the original code instruction. The illustrated front end portion 1210 also includes register renaming logic 1225 and scheduling logic 1230, which generally allocate resources and queue the operation corresponding to the convert instruction for execution.

Processor core 1200 is shown including execution logic 1250 having a set of execution units 1255-1 through 1255-N. Some embodiments may include a number of execution units dedicated to specific functions or sets of functions. Other embodiments may include only one execution unit or one execution unit that can perform a particular function. The illustrated execution logic 1250 performs the operations specified by code instructions.

After completion of execution of the operations specified by the code instructions, back end logic 1260 retires the instructions of code 1213. In one embodiment, the processor core 1200 allows out of order execution but requires in order retirement of instructions. Retirement logic 1265 may take a variety of forms as known to those of skill in the art (e.g., re-order buffers or the like). In this manner, processor core 1200 is transformed during execution of code 1213, at least in terms of the output generated by the decoder, the hardware registers and tables utilized by the register renaming logic 1225, and any registers (not shown) modified by the execution logic 1250.

Although not illustrated in FIG. 12, a processing element may include other elements on chip with processor core 1200. For example, a processing element may include memory control logic along with processor core 1200. The processing element may include I/O control logic and/or may include I/O control logic integrated with memory control logic. The processing element may also include one or more caches.

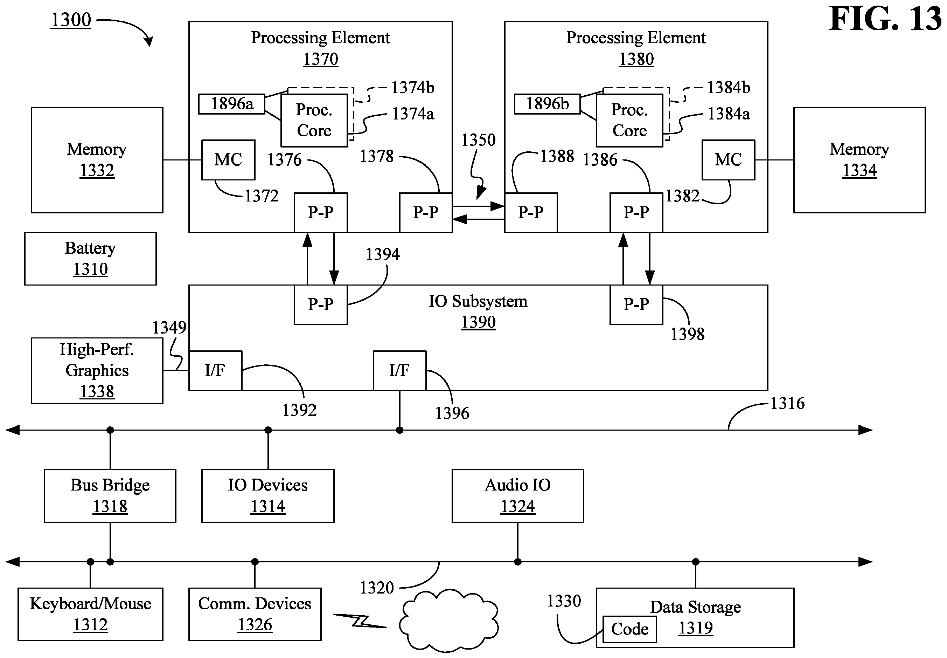

FIG. 13 is a block diagram illustrating an example of a multi-processor based computing system 1300 according to one or more embodiments, with reference to components and features described above including but not limited to the figures and associated description. Multiprocessor system 1300 includes a first processing element 1370 and a second processing element 1380. While two processing elements 1370 and 1380 are shown, it is to be understood that an embodiment of the system 1300 may also include only one such processing element.

The system 1300 is illustrated as a point-to-point interconnect system, wherein the first processing element 1370 and the second processing element 1380 are coupled via a point-to-point interconnect 1350. It should be understood that any or all of the interconnects illustrated in FIG. 13 may be implemented as a multi-drop bus rather than point-to-point interconnect.

As shown in FIG. 13, each of processing elements 1370 and 1380 may be multicore processors, including first and second processor cores (i.e., processor cores 1374a and 1374b and processor cores 1384a and 1384b). Such cores 1374a, 1374b, 1384a, 1384b may be configured to execute instruction code in a manner similar to that discussed above in connection with FIG. 12.

Each processing element 1370, 1380 may include at least one shared cache 1896a, 1896b. The shared cache 1896a, 1896b may store data (e.g., instructions) that are utilized by one or more components of the processor, such as the cores 1374a, 1374b and 1384a, 1384b, respectively. For example, the shared cache 1896a, 1896b may locally cache data stored in a memory 1332, 1334 for faster access by components of the processor. In one or more embodiments, the shared cache 1896a, 1896b may include one or more mid-level caches, such as level 2 (L2), level 3 (L3), level 4 (L4), or other levels of cache, a last level cache (LLC), and/or combinations thereof.

While shown with only two processing elements 1370, 1380, it is to be understood that the scope of the embodiments are not so limited. In other embodiments, one or more additional processing elements may be present in a given processor. Alternatively, one or more of processing elements 1370, 1380 may be an element other than a processor, such as an accelerator or a field programmable gate array. For example, additional processing element(s) may include additional processors(s) that are the same as a first processor 1370, additional processor(s) that are heterogeneous or asymmetric to processor a first processor 1370, accelerators (such as, e.g., graphics accelerators or digital signal processing (DSP) units), field programmable gate arrays, or any other processing element. There can be a variety of differences between the processing elements 1370, 1380 in terms of a spectrum of metrics of merit including architectural, micro architectural, thermal, power consumption characteristics, and the like. These differences may effectively manifest themselves as asymmetry and heterogeneity amongst the processing elements 1370, 1380. For at least one embodiment, the various processing elements 1370, 1380 may reside in the same die package.

The first processing element 1370 may further include memory controller logic (MC) 1372 and point-to-point (P-P) interfaces 1376 and 1378. Similarly, the second processing element 1380 may include a MC 1382 and P-P interfaces 1386 and 1388. As shown in FIG. 13, MC's 1372 and 1382 couple the processors to respective memories, namely a memory 1332 and a memory 1334, which may be portions of main memory locally attached to the respective processors. While the MC 1372 and 1382 is illustrated as integrated into the processing elements 1370, 1380, for alternative embodiments the MC logic may be discrete logic outside the processing elements 1370, 1380 rather than integrated therein.

The first processing element 1370 and the second processing element 1380 may be coupled to an I/O subsystem 1390 via P-P interconnects 1376 and 1386, respectively. As shown in FIG. 13, the I/O subsystem 1390 includes P-P interfaces 1394 and 1398. Furthermore, I/O subsystem 1390 includes an interface 1392 to couple I/O subsystem 1390 with a high performance graphics engine 1338. In one embodiment, bus 1349 may be used to couple the graphics engine 1338 to the I/O subsystem 1390. Alternately, a point-to-point interconnect may couple these components.

In turn, I/O subsystem 1390 may be coupled to a first bus 1316 via an interface 1396. In one embodiment, the first bus 1316 may be a Peripheral Component Interconnect (PCI) bus, or a bus such as a PCI Express bus or another third generation I/O interconnect bus, although the scope of the embodiments are not so limited.

As shown in FIG. 13, various I/O devices 1314 (e.g., biometric scanners, speakers, cameras, sensors) may be coupled to the first bus 1316, along with a bus bridge 1318 which may couple the first bus 1316 to a second bus 1320. In one embodiment, the second bus 1320 may be a low pin count (LPC) bus. Various devices may be coupled to the second bus 1320 including, for example, a keyboard/mouse 1312, communication device(s) 1326, and a data storage unit 1319 such as a disk drive or other mass storage device which may include code 1330, in one embodiment. The illustrated code 1330 may implement one or more aspects of the processes described above, including processes for hot object profiling described with reference to FIGs. 3-4, processes for object allocation redirection described with reference to FIGs. 5A-5C and 6, processes for object migration described with reference to FIGs. 7A-7C and 8A-8D. Code 1330 may implement one or more aspects of the processes for operating a managed runtime computing apparatus described above with reference to FIGs. 9A-9C. The illustrated code 1330 may be similar to the code 1213 (FIG. 12), already discussed. Further, an audio I/O 1324 may be coupled to second bus 1320 and a battery 1310 may supply power to the computing system 1300.

Note that other embodiments are contemplated. For example, instead of the point-to-point architecture of FIG. 13, a system may implement a multi-drop bus or another such communication topology. Also, the elements of FIG. 13 may alternatively be partitioned using more or fewer integrated chips than shown in FIG. 13.

Each of the systems and methods described above, and each of the embodiments (including implementations) thereof, for managing a runtime computer apparatus for tiered object memory placement is considered to be performance-enhanced at least to the extent that it includes identifying hot objects, allocating hot objects to a hot object heap in a first memory tier and allocating cold objects to a cold object heap in a second memory tier, and migrating objects between the hot object heap and the cold object heap based on an object hotness score. Apportioning objects between memory tiers based on an object's hotness promotes the ability to optimize or enhance performance and/or cost for a hybrid memory architecture. For example, allocating hot objects to a higher-performing memory tier will promote improved overall performance, since those objects accessed (or likely to be accessed) frequently will have a greater impact on performance compared to objects accessed less frequently. Similarly, allocating cold objects to a lower cost (but lower-performing) memory tier will have a lesser impact on overall performance, since any performance difference for infrequently-accessed objects would not be likely to add up to a significant difference in overall performance; yet allocating cold objects to a lower cost memory tier will be more cost effective than placing those cold objects in a more costly memory tier. Overall, the tiered object memory placement techniques described herein may provide for reduced cost of memory while minimizing any degradation of performance caused through use of lower-performing memory in a memory tier. Indeed, the enhanced performance may translate into better responsiveness and/or smoothness of applications and an improved user experience.

### Additional Notes and Examples:

Example 1 includes an enhanced computing system for managing a runtime computing environment, comprising a processor, and a memory coupled to the processor, the memory including a set of instructions which, when executed by the processor, cause the computing system to assign a hotness score to an object having an object type based on an invocation count of objects referenced by a hot method, allocate a newly-created object to one of a hot object heap, said hot object heap assigned to store hot objects in a first memory tier, or a cold object heap, said cold object heap assigned to store cold objects in a second memory tier, based on the hotness score associated with the object type for the newly-created object, and migrate a plurality of objects between the hot object heap and the cold object heap based on a hotness score associated with each object, said object migration operating in an execution thread independent of an execution thread for said object allocation.

Example 2 includes the computing system of Example 1, wherein the instructions, when executed, further cause the computing system to monitor the invocation frequency of objects in the hot object heap and the invocation frequency of objects in the cold object heap, and modify the hotness score of at least one object based on the monitored invocation frequency of that object.

Example 3 includes the computing system of Example 2, wherein to migrate a plurality of objects between the hot object heap and the cold object heap, the instructions, when executed, cause the computing system to move a first object from the cold object heap to the hot object heap if the hotness score associated with the first object is greater than a threshold value, and move a second object from the hot object heap to the cold object heap if the hotness score associated with the second object is less than or equal to the threshold value.

Example 4 includes the computing system of Example 3, wherein the threshold value is determined based on a relative capacity of the first tier memory and the second tier memory.

Example 5 includes the computing system of Example 1, wherein to allocate a newly-created object to a hot object heap, the instructions, when executed, cause the computing system to replace a cold object allocator function with a hot object allocator function.

Example 6 includes the computing system of any one of Examples 1 to 5, wherein the instructions, when executed, further cause the computing system to assign a predetermined hotness score for a second newly-created object, the second newly-created object created by the hot method, and allocate the second newly-created object to the hot object heap.

Example 7 includes a semiconductor apparatus for managing a runtime computing environment, comprising one or more substrates, and logic coupled to the one or more substrates, wherein the logic is implemented at least partly in one or more of configurable logic or fixed-functionality hardware logic, the logic coupled to the one or more substrates to assign a hotness score to an object having an object type based on an invocation count of objects referenced by a hot method, allocate a newly-created object to one of a hot object heap, said hot object heap assigned to store hot objects in a first memory tier, or a cold object heap, said cold object heap assigned to store cold objects in a second memory tier, based on the hotness score associated with the object type for the newly-created object, and migrate a plurality of objects between the hot object heap and the cold object heap based on a hotness score associated with each object, said object migration operating in an execution thread independent of an execution thread for said object allocation.

Example 8 includes the semiconductor apparatus of Example 7, wherein the logic coupled to the one or more substrates is further to monitor the invocation frequency of objects in the hot object heap and the invocation frequency of objects in the cold object heap, and modify the hotness score of at least one object based on the monitored invocation frequency of that object.

Example 9 includes the semiconductor apparatus of Example 8, wherein to migrate a plurality of objects between the hot object heap and the cold object heap, the logic coupled to the one or more substrates is to move a first object from the cold object heap to the hot object heap if the hotness score associated with the first object is greater than a threshold value, and move a second object from the hot object heap to the cold object heap if the hotness score associated with the second object is less than or equal to the threshold value.

Example 10 includes the semiconductor apparatus of Example 9, wherein the threshold value is determined based on a relative capacity of the first tier memory and the second tier memory.

Example 11 includes the semiconductor apparatus of Example 7, wherein to allocate a newly-created object to a hot object heap, the logic coupled to the one or more substrates is to replace a cold object allocator function with a hot object allocator function.

Example 12 includes the semiconductor apparatus of any one of Examples 7 to 11, wherein the logic coupled to the one or more substrates is further to assign a predetermined hotness score for a second newly-created object, the second newly-created object created by the hot method, and allocate the second newly-created object to the hot object heap.

Example 13 includes at least one non-transitory computer readable storage medium comprising a set of instructions for managing a runtime computing environment which, when executed by a computing system, cause the computing system to assign a hotness score to an object having an object type based on an invocation count of objects referenced by a hot method, allocate a newly-created object to one of a hot object heap, said hot object heap assigned to store hot objects in a first memory tier, or a cold object heap, said cold object heap assigned to store cold objects in a second memory tier, based on the hotness score associated with the object type for the newly-created object, and migrate a plurality of objects between the hot object heap and the cold object heap based on a hotness score associated with each object, said object migration operating in an execution thread independent of an execution thread for said object allocation.

Example 14 includes the at least one non-transitory computer readable storage medium of Example 13, wherein the instructions, when executed, further cause the computing system to monitor the invocation frequency of objects in the hot object heap and the invocation frequency of objects in the cold object heap, and modify the hotness score of at least one object based on the monitored invocation frequency of that object.

Example 15 includes the at least one non-transitory computer readable storage medium of Example 14, wherein to migrate a plurality of objects between the hot object heap and the cold object heap, the instructions, when executed, cause the computing system to move a first object from the cold object heap to the hot object heap if the hotness score associated with the first object is greater than a threshold value, and move a second object from the hot object heap to the cold object heap if the hotness score associated with the second object is less than or equal to the threshold value.

Example 16 includes the at least one non-transitory computer readable storage medium of Example 15, wherein the threshold value is determined based on a relative capacity of the first tier memory and the second tier memory.

Example 17 includes the at least one non-transitory computer readable storage medium of Example 13, wherein to allocate a newly-created object to a hot object heap, the instructions, when executed, cause the computing system to replace a cold object allocator function with a hot object allocator function.

Example 18 includes the at least one non-transitory computer readable storage medium of any one of Examples 13 to 17, wherein the instructions, when executed, further cause the computing system to assign a predetermined hotness score for a second newly-created object, the second newly-created object created by the hot method, and allocate the second newly-created object to the hot object heap.

Example 19 includes a method of operating a computing apparatus for managing a runtime computing environment, comprising assigning a hotness score to an object having an object type based on an invocation count of objects referenced by a hot method, allocating a newly-created object to one of a hot object heap, said hot object heap assigned to store hot objects in a first memory tier, or a cold object heap, said cold object heap assigned to store cold objects in a second memory tier, based on the hotness score associated with the object type for the newly-created object, and migrating a plurality of objects between the hot object heap and the cold object heap based on a hotness score associated with each object, said object migration operating in an execution thread independent of an execution thread for said object allocation.

Example 20 includes the method of Example 19, further comprising monitoring the invocation frequency of objects in the hot object heap and the invocation frequency of objects in the cold object heap, and modifying the hotness score of at least one object based on the monitored invocation frequency of that object.

Example 21 includes the method of Example 20, wherein migrating a plurality of objects between the hot object heap and the cold object heap comprises moving a first object from the cold object heap to the hot object heap if the hotness score associated with the first object is greater than a threshold value, and moving a second object from the hot object heap to the cold object heap if the hotness score associated with the second object is less than or equal to the threshold value.

Example 22 includes the method of Example 21, wherein the threshold value is determined based on a relative capacity of the first tier memory and the second tier memory.

Example 23 includes the method of any one of Examples 19 to 22, further comprising assigning a predetermined hotness score for a second newly-created object, the second newly-created object created by the hot method, and allocating the second newly-created object to the hot object heap.

Example 24 includes an apparatus for managing a runtime computing environment, comprising means for assigning a hotness score to an object having an object type based on an invocation count of objects referenced by a hot method, means for allocating a newly-created object to one of a hot object heap, said hot object heap assigned to store hot objects in a first memory tier, or a cold object heap, said cold object heap assigned to store cold objects in a second memory tier, based on the hotness score associated with the object type for the newly-created object, and means for migrating a plurality of objects between the hot object heap and the cold object heap based on a hotness score associated with each object, said object migration operating in an execution thread independent of an execution thread for said object allocation.

Example 25 includes the apparatus of Example 24, further comprising means for monitoring heap objects and updating a hotness score for monitored objects.

Example 26 includes the method of Example 19, wherein allocating a newly-created object to a hot object heap comprises replacing a cold object allocator function with a hot object allocator function.

Thus, technology described herein improves the performance of managed runtime computer environments through implementing tiered object memory placement by identifying hot objects, allocating hot objects to a hot object heap in a first memory tier and allocating cold objects to a cold object heap in a second memory tier, and migrating objects between the hot object heap and the cold object heap based on an object hotness score. Apportioning objects between memory tiers based on an object's hotness promotes the ability to optimize or enhance performance and/or cost for a hybrid memory architecture. For example, allocating hot objects to a higher-performing memory tier will promote improved overall performance, since those objects accessed (or likely to be accessed) frequently will have a greater impact on performance compared to objects accessed less frequently. Similarly, allocating cold objects to a lower cost (but lower-performing) memory tier will have a lesser impact on overall performance, since any performance difference for infrequently-accessed objects would not be likely to add up to a significant difference in overall performance; yet allocating cold objects to a lower cost memory tier will be more cost effective than placing those cold objects in a more costly memory tier. Overall, the tiered object memory placement techniques described herein may provide for reduced cost of memory while minimizing any degradation of performance caused through use of lower-performing memory in a memory tier. Indeed, the enhanced performance may translate into better responsiveness and/or smoothness of applications and an improved user experience. The technology described herein may be applicable in any number of managed runtime environments, including servers, cloud computing, browsers, and/or environments using JIT or AOT (ahead of time) compilation/processing.

Embodiments are applicable for use with all types of semiconductor integrated circuit ("IC") chips. Examples of these IC chips include but are not limited to processors, controllers, chipset components, programmable logic arrays (PLAs), memory chips, network chips, systems on chip (SoCs), SSD/NAND controller ASICs, and the like. In addition, in some of the drawings, signal conductor lines are represented with lines. Some may be different, to indicate more constituent signal paths, have a number label, to indicate a number of constituent signal paths, and/or have arrows at one or more ends, to indicate primary information flow direction. This, however, should not be construed in a limiting manner. Rather, such added detail may be used in connection with one or more exemplary embodiments to facilitate easier understanding of a circuit. Any represented signal lines, whether or not having additional information, may actually comprise one or more signals that may travel in multiple directions and may be implemented with any suitable type of signal scheme, e.g., digital or analog lines implemented with differential pairs, optical fiber lines, and/or single-ended lines.

Example sizes/models/values/ranges may have been given, although embodiments are not limited to the same. As manufacturing techniques (e.g., photolithography) mature over time, it is expected that devices of smaller size could be manufactured. In addition, well known power/ground connections to IC chips and other components may or may not be shown within the figures, for simplicity of illustration and discussion, and so as not to obscure certain aspects of the embodiments. Further, arrangements may be shown in block diagram form in order to avoid obscuring embodiments, and also in view of the fact that specifics with respect to implementation of such block diagram arrangements are highly dependent upon the platform within which the embodiment is to be implemented, i.e., such specifics should be well within purview of one skilled in the art. Where specific details (e.g., circuits) are set forth in order to describe example embodiments, it should be apparent to one skilled in the art that embodiments can be practiced without, or with variation of, these specific details. The description is thus to be regarded as illustrative instead of limiting.

The term "coupled" may be used herein to refer to any type of relationship, direct or indirect, between the components in question, and may apply to electrical, mechanical, fluid, optical, electromagnetic, electromechanical or other connections. In addition, the terms "first", "second", etc. may be used herein only to facilitate discussion, and carry no particular temporal or chronological significance unless otherwise indicated.

As used in this application and in the claims, a list of items joined by the term "one or more of" may mean any combination of the listed terms. For example, the phrases "one or more of A, B or C" may mean A, B, C; A and B; A and C; B and C; or A, B and C.

Those skilled in the art will appreciate from the foregoing description that the broad techniques of the embodiments can be implemented in a variety of forms. Therefore, while the embodiments have been described in connection with particular examples thereof, the true scope of the embodiments should not be so limited since other modifications will become apparent to the skilled practitioner upon a study of the drawings, specification, and following claims.

## Claims

1. A semiconductor apparatus (1110) for managing a runtime computing environment, comprising:
one or more substrates (1111); and
logic (1112) coupled to the one or more substrates (1111), wherein the logic is adapted to be implemented at least partly in one or more of configurable logic or fixed-functionality hardware logic, the logic (1112) coupled to the one or more substrates (1111) to:
assign a hotness score to an object having an object type based on an invocation count of objects referenced by a hot method;
wherein a method is identified as hot method based on a frequency of method calls; and
allocate a newly-created object to one of a hot object heap (126; 211), said hot object heap (126; 211) assigned to store hot objects in a first memory tier (1032), or a cold object heap (127; 214), said cold object heap (127; 214) assigned to store cold objects in a second memory tier (1034), based on the hotness score associated with the object type for the newly-created object; and
migrate a plurality of objects between the hot object heap (126; 211) and the cold object heap (127; 214) based on a hotness score associated with each object, said object migration operating in an execution thread independent of an execution thread for said object allocation.

2. The semiconductor apparatus (1110) of claim 1, wherein the logic (1112) coupled to the one or more substrates (1111) is further to:
monitor the invocation frequency of objects in the hot object heap (126; 211) and the invocation frequency of objects in the cold object heap (127; 214); and
modify the hotness score of at least one object based on the monitored invocation frequency of that object.

3. The semiconductor apparatus (1110) of claim 1 or 2, wherein to migrate a plurality of objects between the hot object heap (126; 211) and the cold object heap (127; 214), the logic (1112) coupled to the one or more substrates (1111) is to:
move a first object from the cold object heap (127; 214) to the hot object heap (126; 211) if the hotness score associated with the first object is greater than a threshold value; and
move a second object from the hot object heap (126; 211) to the cold object heap (127; 214) if the hotness score associated with the second object is less than or equal to the threshold value,
wherein the threshold value is determined based on a relative capacity of the first tier memory (1032) and the second tier memory (1034).

4. The semiconductor apparatus (1110) of claim 1, 2 or 3, wherein to allocate a newly-created object to a hot object heap (126; 211), the logic (1112) coupled to the one or more substrates (1111) is to replace a cold object allocator function with a hot object allocator function.

5. The semiconductor apparatus (1110) of any of claims 1 to 4, wherein the logic (1112) coupled to the one or more substrates (1111) is further to:
assign a predetermined hotness score for a second newly-created object, the second newly-created object created by the hot method; and
allocate the second newly-created object to the hot object heap (126; 211).

6. At least one non-transitory computer readable storage medium (1030) comprising a set of instructions (1040) for managing a runtime computing environment which, when executed by a computing system (1010; 1300), cause the computing system (1010; 1300) to:
assign a hotness score to an object having an object type based on an invocation count of objects referenced by a hot method,
wherein a method is identified as hot method based on a frequency of method calls; and
allocate a newly-created object to one of a hot object heap (126; 211), said hot object heap (126; 211) assigned to store hot objects in a first memory tier (1032), or a cold object heap (127; 214), said cold object heap (127; 214) assigned to store cold objects in a second memory tier (1034), based on the hotness score associated with the object type for the newly-created object; and
migrate a plurality of objects between the hot object heap (126; 211) and the cold object heap (2127; 214) based on a hotness score associated with each object, said object migration operating in an execution thread independent of an execution thread for said object allocation.

7. The at least one non-transitory computer readable storage medium (1030) of claim 6, wherein the instructions (1040), when executed, further cause the computing system (1010; 1300) to:
monitor the invocation frequency of objects in the hot object heap (126; 211) and the invocation frequency of objects in the cold object heap (127; 214); and
modify the hotness score of at least one object based on the monitored invocation frequency of that object.

8. The at least one non-transitory computer readable storage medium (103) of claim 6 or 7, wherein to migrate a plurality of objects between the hot object heap (126; 211) and the cold object heap (127; 214), the instructions (1040), when executed, cause the computing system (1010; 1300) to:
move a first object from the cold object heap (127; 214) to the hot object heap (126; 211) if the hotness score associated with the first object is greater than a threshold value; and
move a second object from the hot object heap (126; 211) to the cold object heap (127; 214) if the hotness score associated with the second object is less than or equal to the threshold value,
wherein the threshold value is determined based on a relative capacity of the first tier memory (1032) and the second tier memory (1034).

9. The at least one non-transitory computer readable storage medium (1030) of claim 6, 7 or 8, wherein to allocate a newly-created object to a hot object heap (126; 211), the instructions (1040), when executed, cause the computing system (1010; 1300) to replace a cold object allocator function with a hot object allocator function.

10. The at least one non-transitory computer readable storage medium (1030) of any of claims 6 to 9, wherein the instructions (1040), when executed, further cause the computing system (1010; 1300) to:
assign a predetermined hotness score for a second newly-created object, the second newly-created object created by the hot method; and
allocate the second newly-created object to the hot object heap (126; 211).

11. A method (910; 920; 930) of operating a computing apparatus (1010; 1300) for managing a runtime computing environment, comprising:
assigning (912) a hotness score to an object having an object type based on an invocation count of objects referenced by a hot method,
wherein a method is identified as hot method based on a frequency of method calls; and
allocating (914) a newly-created object to one of a hot object heap (126; 211), said hot object heap (126; 211) assigned to store hot objects in a first memory tier (1032), or a cold object heap (127; 214), said cold object heap (127; 214) assigned to store cold objects in a second memory tier (1034), based on the hotness score associated with the object type for the newly-created object; and
migrating (916) a plurality of objects between the hot object heap (126; 211) and the cold object heap (127; 214) based on a hotness score associated with each object, said object migration operating in an execution thread independent of an execution thread for said object allocation.

12. The method (910; 920; 930) of claim 11, further comprising:
monitoring (922) the invocation frequency of objects in the hot object heap (126; 211) and the invocation frequency of objects in the cold object heap (127; 214); and
modifying (924) the hotness score of at least one object based on the monitored invocation frequency of that object.

13. The method (910; 920; 930) of claim 11 or 12, wherein migrating a plurality of objects between the hot object heap (126; 211) and the cold object heap (127; 214) comprises:
moving (932) a first object from the cold object heap (127; 214) to the hot object heap (126; 211) if the hotness score associated with the first object is greater than a threshold value; and
moving (934) a second object from the hot object heap (126; 211) to the cold object heap (127; 214) if the hotness score associated with the second object is less than or equal to the threshold value,
wherein the threshold value is determined based on a relative capacity of the first tier memory (1032) and the second tier memory (1034).

14. The method (910; 920; 930) of claim 11, 12 or 13, wherein allocating a newly-created object to a hot object heap (126; 211) comprises replacing a cold object allocator function with a hot object allocator function.

15. The method (910; 920; 930) of any of claims 11 to 14, further comprising:
assigning (912) a predetermined hotness score for a second newly-created object, the second newly-created object created by the hot method; and
allocating (914) the second newly-created object to the hot object heap (126; 211).

## Patentansprüche

1. Halbleitervorrichtung (1110) zum Verwalten einer Laufzeitrechenumgebung, die Folgendes umfasst:
ein oder mehrere Substrate (1111); und
Logik (1112), die mit dem einen oder den mehreren Substraten (1111) gekoppelt ist, wobei die Logik so ausgelegt ist, dass sie zumindest teilweise in einer oder mehreren von konfigurierbarer Logik oder Hardware-Logik mit fester Funktionalität implementiert wird, wobei die Logik (1112) mit dem einen oder den mehreren Substraten (1111) gekoppelt ist, um Folgendes zu bewirken:
Zuweisen einer Hotness-Bewertung zu einem Objekt mit einem Objekttyp basierend auf einer Aufrufzählung von Objekten, auf die durch ein Hot-Verfahren verwiesen wird; wobei ein Verfahren auf der Grundlage der Häufigkeit von Verfahrensaufrufen als Hot-Verfahren identifiziert wird; und
Zuordnen eines neu erzeugten Objekts zu einem Hot-Object-Heap (126; 211), wobei der Hot-Object-Heap (126; 211) dem Speichern von Hot-Objects in einer ersten Speicherebene (1032) zugewiesen ist, oder zu einem Cold-Object-Heap (127; 214), wobei der Cold-Object-Heap (127; 214) dem Speichern von Cold-Objects in einer zweiten Speicherebene (1034) zugewiesen ist, basierend auf der Hotness-Bewertung, die dem Objekttyp für das neu erzeugte Objekt zugeordnet ist; und
Migrieren einer Mehrzahl von Objekten zwischen dem Hot-Object-Heap (126; 211) und dem Cold-Object-Heap (127; 214) auf der Grundlage einer Hotness-Bewertung, die jedem Objekt zugeordnet ist, wobei die Objektmigration in einem Ausführungs-Thread unabhängig von einem Ausführungs-Thread für die Objektzuweisung erfolgt.

2. Halbleitervorrichtung (1110) nach Anspruch 1, wobei die Logik (1112), die mit dem einen oder mehreren Substraten (1111) gekoppelt ist, ferner zu Folgendem dient:
Überwachen der Aufrufhäufigkeit von Objekten in dem Hot-Object-Heap (126; 211) und der Aufrufhäufigkeit von Objekten in dem Cold-Object-Heap (127; 214); und
Ändern der Hotness-Bewertung von mindestens einem Objekt auf der Grundlage der überwachten Aufrufhäufigkeit dieses Objekts.

3. Halbleitervorrichtung (1110) nach Anspruch 1 oder 2, wobei zum Migrieren einer Mehrzahl von Objekten zwischen dem Hot-Object-Heap (126; 211) und dem Cold-Object-Heap (127; 214) die Logik (1112) mit dem einen oder mehreren Substraten (1111) gekoppelt ist:
Verschieben eines ersten Objekts aus dem Cold-Object-Heap (127; 214) in den Hot-Object-Heap (126; 211), wenn der dem ersten Objekt zugeordnete Hotness-Wert größer als ein Schwellenwert ist; und
Verschieben eines zweiten Objekts aus dem Hot-Object-Heap (126; 211) in den Cold-Object-Heap (127; 214), wenn der dem zweiten Objekt zugeordnete Hotness-Wert kleiner oder gleich dem Schwellenwert ist,
wobei der Schwellenwert auf der Grundlage einer relativen Kapazität des Speichers der ersten Schicht (1032) und des Speichers der zweiten Schicht (1034) bestimmt wird.

4. Halbleitervorrichtung (1110) nach Anspruch 1, 2 oder 3, wobei zum Zuordnen eines neu erzeugten Objekts zu einem Hot-Object-Heap (126; 211) die mit dem einen oder den mehreren Substraten (1111) gekoppelte Logik (1112) eine Cold-Object-Allokatorfunktion durch eine Hot-Object-Allokatorfunktion ersetzen soll.

5. Halbleitervorrichtung (1110) nach einem der Ansprüche 1 bis 4, wobei die Logik (1112) mit dem einen oder mehreren Substraten (1111) gekoppelt ist, um Folgendes zu bewirken:
Zuweisen einer vorbestimmten Hotness-Bewertung für ein zweites neu erzeugtes Objekt, wobei das zweite neu erzeugte Objekt durch das Hot-Verfahren erzeugt wird; und Zuweisen des zweiten neu erstellten Objekts zum Hot-Object-Heap (126; 211).

6. Mindestens ein nichtflüchtiges computerlesbares Speichermedium (1030), das einen Satz von Anweisungen (1040) zum Verwalten einer Laufzeit-Computerumgebung umfasst, die, wenn sie von einem Computersystem (1010; 1300) ausgeführt werden, das Computersystem (1010; 1300) zu Folgendem veranlassen:
Zuweisen eines Hotness-Wertes zu einem Objekt, das einen Objekttyp hat, basierend auf einem Aufruf-Zählwert von Objekten, auf die von einem Hot-Verfahren verwiesen wird, wobei ein Verfahren auf der Grundlage der Häufigkeit von Verfahrensaufrufen als Hot-Verfahren identifiziert wird; und
Zuordnen eines neu erzeugten Objekts zu einem Hot-Object-Heap (126; 211), wobei der Hot-Object-Heap (126; 211) dem Speichern von Hot-Objects in einer ersten Speicherebene (1032) zugewiesen ist, oder zu einem Cold-Object-Heap (127; 214), wobei der Cold-Object-Heap (127; 214) dem Speichern von Cold-Objects in einer zweiten Speicherebene (1034) zugewiesen ist, basierend auf der Hotness-Bewertung, die dem Objekttyp für das neu erzeugte Objekt zugeordnet ist; und
Migrieren einer Mehrzahl von Objekten zwischen dem Hot-Object-Heap (126; 211) und dem Cold-Object-Heap (2127; 214) auf der Grundlage einer Hotness-Bewertung, die jedem Objekt zugeordnet ist, wobei die Objektmigration in einem Ausführungs-Thread unabhängig von einem Ausführungs-Thread für die Objektzuweisung erfolgt.

7. Mindestens ein nichtflüchtiges computerlesbares Speichermedium (1030) nach Anspruch 6, wobei die Anweisungen (1040), wenn sie ausgeführt werden, das Computersystem (1010; 1300) ferner zu Folgendem veranlassen:
Überwachen der Aufrufhäufigkeit von Objekten in dem Hot-Object-Heap (126; 211) und der Aufrufhäufigkeit von Objekten in dem Cold-Object-Heap (127; 214); und
Ändern der Hotness-Bewertung von mindestens einem Objekt auf der Grundlage der überwachten Aufrufhäufigkeit dieses Objekts.

8. Mindestens ein nichtflüchtiges computerlesbares Speichermedium (103) nach Anspruch 6 oder 7, wobei zum Migrieren einer Mehrzahl von Objekten zwischen dem Hot-Object-Heap (126; 211) und dem Cold-Object-Heap (127; 214) die Anweisungen (1040), wenn sie ausgeführt werden, das Computersystem (1010; 1300) zu Folgendem veranlassen:
Verschieben eines ersten Objekts aus dem Cold-Object-Heap (127; 214) in den Hot-Object-Heap (126; 211), wenn der dem ersten Objekt zugeordnete Hotness-Wert größer als ein Schwellenwert ist; und
Verschieben eines zweiten Objekts aus dem Hot-Object-Heap (126; 211) in den Cold-Object-Heap (127; 214), wenn der dem zweiten Objekt zugeordnete Hotness-Wert kleiner oder gleich dem Schwellenwert ist,
wobei der Schwellenwert auf der Grundlage einer relativen Kapazität des Speichers der ersten Schicht (1032) und des Speichers der zweiten Schicht (1034) bestimmt wird.

9. Mindestens ein nichtflüchtiges computerlesbares Speichermedium (1030) nach Anspruch 6, 7 oder 8, wobei die Anweisungen (1040), wenn sie ausgeführt werden, das Computersystem (1010; 1300) veranlassen, eine Cold-Object-Allokatorfunktion durch eine Hot-Object-Allokatorfunktion zu ersetzen, um ein neu erstelltes Objekt einem Hot-Object-Heap (126; 211) zuzuordnen.

10. Mindestens ein nichtflüchtiges computerlesbares Speichermedium (1030) nach einem der Ansprüche 6 bis 9, wobei die Anweisungen (1040), wenn sie ausgeführt werden, das Computersystem (1010; 1300) ferner zu Folgendem veranlassen:
Zuweisen einer vorbestimmten Hotness-Bewertung für ein zweites neu erzeugtes Objekt, wobei das zweite neu erzeugte Objekt durch das Hot-Verfahren erzeugt wird; und Zuweisen des zweiten neu erstellten Objekts zum Hot-Object-Heap (126; 211).

11. Verfahren (910; 920; 930) zum Betreiben einer Rechenvorrichtung (1010; 1300) zur Verwaltung einer Laufzeit-Rechenumgebung, das Folgendes umfasst:
Zuweisen (912) einer Hotness-Bewertung zu einem Objekt, das einen Objekttyp hat, basierend auf einem Aufruf-Zählwert von Objekten, auf die von einem Hot-Verfahren verwiesen wird,
wobei ein Verfahren auf der Grundlage der Häufigkeit von Verfahrensaufrufen als Hot-Verfahren identifiziert wird; und
Zuordnen (914) eines neu erzeugten Objekts zu einem Hot-Object-Heap (126; 211), wobei der Hot-Object-Heap (126; 211) dem Speichern von Hot-Objects in einer ersten Speicherebene (1032) zugewiesen ist, oder zu einem Cold-Object-Heap (127; 214), wobei der Cold-Object-Heap (127; 214) dem Speichern von Cold-Objects in einer zweiten Speicherebene (1034) zugewiesen ist, basierend auf der Hotness-Bewertung, die dem Objekttyp für das neu erzeugte Objekt zugeordnet ist; und
Migrieren (916) einer Mehrzahl von Objekten zwischen dem Hot-Object-Heap (126; 211) und dem Cold-Object-Heap (127; 214) auf der Grundlage einer Hotness-Bewertung, die jedem Objekt zugeordnet ist, wobei die Objektmigration in einem Ausführungs-Thread unabhängig von einem Ausführungs-Thread für die Objektzuweisung erfolgt.

12. Verfahren (910; 920; 930) nach Anspruch 11, das ferner Folgendes umfasst:
Überwachen (922) der Aufrufhäufigkeit von Objekten in dem Hot-Object-Heap (126; 211) und der Aufrufhäufigkeit von Objekten in dem Cold-Object-Heap (127; 214); und
Ändern (924) der Hotness-Bewertung von mindestens einem Objekt auf der Grundlage der überwachten Aufrufhäufigkeit dieses Objekts.

13. Verfahren (910; 920; 930) nach Anspruch 11 oder 12, wobei das Migrieren einer Mehrzahl von Objekten zwischen dem Hot-Object-Heap (126; 211) und dem Cold-Object-Heap (127; 214) Folgendes umfasst:
Verschieben (932) eines ersten Objekts aus dem Cold-Object-Heap (127; 214) in den Hot-Object-Heap (126; 211), wenn der dem ersten Objekt zugeordnete Hotness-Wert größer als ein Schwellenwert ist; und
Verschieben (934) eines zweiten Objekts aus dem Hot-Object-Heap (126; 211) in den Cold-Object-Heap (127; 214), wenn der dem zweiten Objekt zugeordnete Hotness-Wert kleiner oder gleich dem Schwellenwert ist,
wobei der Schwellenwert auf der Grundlage einer relativen Kapazität des Speichers der ersten Schicht (1032) und des Speichers der zweiten Schicht (1034) bestimmt wird.

14. Verfahren (910; 920; 930) nach Anspruch 11, 12 oder 13, wobei das Zuordnen eines neu erzeugten Objekts zu einem Hot-Object-Heap (126; 211) das Ersetzen einer Cold-Object-Allocator-Funktion durch eine Hot-Object-Allocator-Funktion umfasst.

15. Verfahren (910; 920; 930) nach einem der Ansprüche 11 bis 14, das ferner Folgendes umfasst:
Zuweisen (912) einer vorbestimmten Hotness-Bewertung für ein zweites, neu erzeugtes Objekt, wobei das zweite, neu erzeugte Objekt durch das Hot-Verfahren erzeugt wird; und Zuordnen (914) des zweiten neu erzeugten Objekts zum Hot-Object-Heap (126; 211).

## Revendications

1. Appareil à semi-conducteurs (1110) destiné à gérer un environnement informatique d'exécution, comprenant :
un ou plusieurs substrats (1111) ; et
une logique (1112) couplée aux un ou plusieurs substrats (1111), la logique étant adaptée pour être au moins partiellement mise en œuvre dans une ou plusieurs logiques parmi une logique configurable et une logique matérielle à fonctionnalité fixe, la logique (1112) étant couplée aux un ou plusieurs substrats (1111) pour :
assigner un score de popularité à un objet ayant un type d'objet basé sur un nombre d'invocations d'objets référencés par un procédé populaire ;
où un procédé est identifié comme procédé populaire sur la base d'une fréquence d'appels de procédé ; et
allouer un objet nouvellement créé à l'un d'un amas d'objets populaires (126 ; 211), ledit amas d'objets populaires (126 ; 211) étant assigné pour stocker des objets populaires dans un premier niveau de mémoire (1032), ou un amas d'objets peu utilisés (127 ; 214), ledit amas d'objets peu utilisés (127 ; 214) étant assigné pour stocker des objets peu utilisés dans un deuxième niveau de mémoire (1034), en fonction du score de popularité associé au type d'objet pour l'objet nouvellement créé ; et
faire migrer une pluralité d'objets entre l'amas d'objets populaires (126 ; 211) et l'amas d'objets peu utilisés (127 ; 214) sur la base d'un score de popularité associé à chaque objet, ladite migration d'objets fonctionnant dans un thread d'exécution indépendant d'un thread d'exécution pour ladite allocation d'objets.

2. Appareil à semi-conducteurs (1110) selon la revendication 1, dans lequel la logique (1112) couplée aux un ou plusieurs substrats (1111) est en outre destinée à :
surveiller la fréquence d'invocation d'objets dans l'amas d'objets populaires (126 ; 211) et la fréquence d'invocation d'objets dans l'amas d'objets peu utilisés (127 ; 214) ; et
modifier le score de popularité d'au moins un objet en fonction de la fréquence d'invocation surveillée de cet objet.

3. Appareil à semi-conducteurs (1110) selon la revendication 1 ou la revendication 2, dans lequel, pour faire migrer une pluralité d'objets entre l'amas d'objets populaires (126 ; 211) et l'amas d'objets peu utilisés (127 ; 214), la logique (1112) couplée aux un ou plusieurs substrats (1111) est destinée à :
déplacer un premier objet de l'amas d'objets peu utilisés (127 ; 214) vers l'amas d'objets populaires (126 ; 211) si le score de popularité associé au premier objet est supérieur à une valeur seuil ; et
déplacer un deuxième objet de l'amas d'objets populaires (126 ; 211) vers l'amas d'objets peu utilisés (127 ; 214) si le score de popularité associé au deuxième objet est inférieur ou égal à la valeur seuil,
où la valeur seuil est déterminée en fonction d'une capacité relative de la mémoire de premier niveau (1032) et de la mémoire de deuxième niveau (1034).

4. Appareil à semi-conducteurs (1110) selon les revendications 1, 2 ou 3, dans lequel pour allouer un objet nouvellement créé à un amas d'objets populaires (126 ; 211), la logique (1112) couplée aux un ou plusieurs substrats (1111) doit remplacer une fonction d'allocation d'objets peu utilisés par une fonction d'allocation d'objets populaires.

5. Appareil à semi-conducteurs (1110) selon l'une quelconque des revendication 1 à 4, dans lequel la logique (1112) couplée aux un ou plusieurs substrats (1111) est en outre conçue pour :
assigner un score de popularité prédéterminé à un deuxième objet nouvellement créé, le deuxième objet nouvellement créé étant créé par le procédé populaire ; et
allouer le deuxième objet nouvellement créé à l'amas d'objets populaires (126 ; 211).

6. Au moins un support de stockage non transitoire lisible par ordinateur (1030) comprenant un ensemble d'instructions (1040) pour gérer un environnement informatique d'exécution qui, lorsqu'elles sont exécutées par un système informatique (1010 ; 1300), amènent le système informatique (1010 ; 1300) à :
assigner un score de popularité à un objet ayant un type d'objet basé sur un nombre d'invocations d'objets référencés par un procédé populaire,
où un procédé est identifié comme procédé populaire sur la base d'une fréquence d'appels de procédé ; et
allouer un objet nouvellement créé à l'un d'un amas d'objets populaires (126 ; 211), ledit amas d'objets populaires (126 ; 211) étant assigné pour stocker des objets populaires dans un premier niveau de mémoire (1032), ou un amas d'objets peu utilisés (127 ; 214), ledit amas d'objets peu utilisés (127 ; 214) étant assigné pour stocker des objets peu utilisés dans un deuxième niveau de mémoire (1034), en fonction du score de popularité associé au type d'objet pour l'objet nouvellement créé ; et
faire migrer une pluralité d'objets entre l'amas d'objets populaires (126 ; 211) et l'amas d'objets peu utilisés (2127 ; 214) sur la base d'un score de popularité associé à chaque objet, ladite migration d'objets fonctionnant dans un thread d'exécution indépendant d'un thread d'exécution pour ladite allocation d'objets.

7. Au moins un support de stockage non transitoire lisible par ordinateur (1030) selon la revendication 6, dans lequel les instructions (1040), lorsqu'elles sont exécutées, amènent en outre le système informatique (1010 ; 1300) à :
surveiller la fréquence d'invocation d'objets dans l'amas d'objets populaires (126 ; 211) et la fréquence d'invocation d'objets dans l'amas d'objets peu utilisés (127 ; 214) ; et
modifier le score de popularité d'au moins un objet en fonction de la fréquence d'invocation surveillée de cet objet.

8. Au moins un support de stockage non transitoire lisible par ordinateur (103) selon la revendication 6 ou la revendication 7, dans lequel, pour faire migrer une pluralité d'objets entre l'amas d'objets populaires (126 ; 211) et l'amas d'objets peu utilisés (127 ; 214), les instructions (1040), lorsqu'elles sont exécutées, amènent le système informatique (1010 ; 1300) à :
déplacer un premier objet de l'amas d'objets peu utilisés (127 ; 214) vers l'amas d'objets populaires (126 ; 211) si le score de popularité associé au premier objet est supérieur à une valeur seuil ; et
déplacer un deuxième objet de l'amas d'objets populaires (126 ; 211) vers l'amas d'objets peu utilisés (127 ; 214) si le score de popularité associé au deuxième objet est inférieur ou égal à la valeur seuil,
où la valeur seuil est déterminée en fonction d'une capacité relative de la mémoire de premier niveau (1032) et de la mémoire de deuxième niveau (1034).

9. Au moins un support de stockage non transitoire lisible par ordinateur (1030) selon les revendications 6, 7 ou 8, dans lequel, pour allouer un objet nouvellement créé à un amas d'objets populaires (126 ; 211), les instructions (1040), lorsqu'elles sont exécutées, amènent le système informatique (1010 ; 1300) à remplacer une fonction d'allocation d'objets peu utilisés par une fonction d'allocation d'objets populaires.

10. Un ou plusieurs supports de stockage non transitoires lisibles par ordinateur (1030) selon l'une quelconque des revendications 6 à 9, dans lequel les instructions (1040), lorsqu'elles sont exécutées, amènent en outre le système informatique (1010 ; 1300) à :
assigner un score de popularité prédéterminé à un deuxième objet nouvellement créé, le deuxième objet nouvellement créé étant créé par le procédé populaire ; et
allouer le deuxième objet nouvellement créé à l'amas d'objets populaires (126 ; 211).

11. Procédé (910 ; 920 ; 930) d'exploitation d'un appareil informatique (1010 ; 1300) pour gérer un environnement informatique d'exécution, le procédé comprenant les étapes suivantes :
assigner (912) un score de popularité à un objet ayant un type d'objet basé sur un nombre d'invocations d'objets référencés par un procédé populaire,
où un procédé est identifié comme procédé populaire sur la base d'une fréquence d'appels de procédé ; et
allouer (914) un objet nouvellement créé à l'un d'un amas d'objets populaires (126 ; 211), ledit amas d'objets populaires (126 ; 211) étant assigné pour stocker des objets populaires dans un premier niveau de mémoire (1032), ou un amas d'objets peu utilisés (127 ; 214), ledit amas d'objets peu utilisés (127 ; 214) étant assigné pour stocker des objets peu utilisés dans un deuxième niveau de mémoire (1034), en fonction du score de popularité associé au type d'objet pour l'objet nouvellement créé ; et
faire migrer (916) une pluralité d'objets entre l'amas d'objets populaires (126 ; 211) et l'amas d'objets peu utilisés (127 ; 214) sur la base d'un score de popularité associé à chaque objet, ladite migration d'objets fonctionnant dans un thread d'exécution indépendant d'un thread d'exécution pour ladite allocation d'objets.

12. Procédé (910 ; 920 ; 930) selon la revendication 11, comprenant en outre les étapes suivantes :
surveiller (922) la fréquence d'invocation d'objets dans l'amas d'objets populaires (126 ; 211) et la fréquence d'invocation d'objets dans l'amas d'objets peu utilisés (127 ; 214) ; et
modifier (924) le score de popularité d'au moins un objet en fonction de la fréquence d'invocation surveillée de cet objet.

13. Procédé (910 ; 920 ; 930) selon la revendication 11 ou la revendication 12, dans lequel la migration d'une pluralité d'objets entre l'amas d'objets populaires (126 ; 211) et l'amas d'objets peu utilisés (127 ; 214) comprend les étapes suivantes :
déplacer (932) un premier objet de l'amas d'objets peu utilisés (127 ; 214) vers l'amas d'objets populaires (126 ; 211) si le score de popularité associé au premier objet est supérieur à une valeur seuil ; et
déplacer (934) un deuxième objet de l'amas d'objets populaires (126 ; 211) vers l'amas d'objets peu utilisés (127 ; 214) si le score de popularité associé au deuxième objet est inférieur ou égal à la valeur seuil,
où la valeur seuil est déterminée en fonction d'une capacité relative de la mémoire de premier niveau (1032) et de la mémoire de deuxième niveau (1034).

14. Procédé (910 ; 920 ; 930) selon les revendications 11, 12 ou 13, dans lequel l'allocation d'un objet nouvellement créé à un amas d'objets populaires (126 ; 211) comprend le remplacement d'une fonction d'allocation d'objets peu utilisés par une fonction d'allocation d'objets populaires.

15. Procédé (910 ; 920 ; 930) selon l'une quelconque des revendications 11 à 14, comprenant en outre les étapes suivantes :
assigner (912) un score de popularité prédéterminé à un deuxième objet nouvellement créé, le deuxième objet nouvellement créé étant créé par le procédé populaire ; et
allouer (914) le deuxième objet nouvellement créé à l'amas d'objets populaires (126 ; 211).
